# EUROPEAN PATENT APPLICATION

(11) **EP 4 600 871 A1**
(43) Date of publication of application: **13.08.2025**
(21) Application number: 22961493.8
(22) Date of filing: 07.10.2022
(51) Int. Cl.: G06N 5/022

(54) **INFORMATION PROCESSING PROGRAM, INFORMATION PROCESSING METHOD AND INFORMATION PROCESSING DEVICE**

(71) Applicant: FUJITSU LIMITED, Kawasaki-shi, Kanagawa 211-8588 (JP)
(72) Inventor: ASAI, Tatsuya, Kawasaki-shi, Kanagawa 211-8588 (JP)
(74) Representative: Hoffmann Eitle
(86) International application number: PCT/JP2022/037735
(87) International publication number: WO 2024/075307

(57) **Abstract**

An information processing device includes an enhanced knowledge DB (800). The information processing device reads a plurality of hypotheses including a hypothesis "X : A → B"**,** a hypothesis "Y : A → B"**,** and a hypothesis "Z : A → B" from the enhanced knowledge DB (800). The information processing device calculates a ratio of a sum set obtained by combining conditions X, Y, and Z, with respect to a universal set Ω containing the conditions X, Y**,** and Z, as a condition ratio. In a case where the calculated condition ratio is equal to or more than a threshold, the information processing device adds a hypothesis "Ω : A → B" that unconditionally indicates a causal relationship "A → B", to the enhanced knowledge DB (800).

## Description

### TECHNICAL FIELD

The present invention relates to an information processing device, an information processing method, and an information processing program.

### BACKGROUND ART

Typically, there is a case where it is desired to add a new hypothesis indicating a causal relationship between elements under a specific condition, to an existing knowledge database (DB) that stores a hypothesis indicating a causal relationship between elements with an undetermined condition, to which a condition is not given. For example, it is considered to add a new hypothesis indicating a causal relationship between elements under a specific condition, estimated by artificial intelligence (AI) to the existing knowledge DB.

As the related art, for example, there is a technology for changing a template of knowledge stored in a knowledge base to be applicable to a condition and adding the template to the knowledge base as new knowledge.

### CITATION LIST

### PATENT DOCUMENT

Patent Document 1: Japanese Laid-open Patent Publication No. 04-160536

### SUMMARY OF INVENTION

### TECHNICAL PROBLEM

However, there is a case where it is difficult to appropriately update an existing knowledge DB with the related art. For example, if formats of a hypothesis that can be stored in the existing knowledge DB and the new hypothesis estimated by the AI are different, it is difficult to add the new hypothesis estimated by the AI, to the existing knowledge DB. Furthermore, for example, how to integrate and store a hypothesis indicating a causal relationship between elements with an undetermined condition stored in the existing knowledge DB and a new hypothesis indicating the same causal relationship between the same elements under the specific condition estimated by the AI is unknown.

In one aspect, an object of the present invention is to appropriately update a storage unit.

### SOLUTION TO PROBLEM

According to an embodiment, an information processing program, an information processing method, and an information processing device are proposed that determine whether or not a ratio of a sum set obtained by combining different conditions for a universal set that contains the different conditions is equal to or more than a threshold, for a plurality of hypotheses that indicates a same first causal relationship under the different conditions, stored in a storage unit that stores a hypothesis that indicates a causal relationship between elements and, in a case where the ratio is equal to or more than the threshold, add a first hypothesis that unconditionally indicates the first causal relationship in the universal set, different from the plurality of hypotheses, to the storage unit.

According to an embodiment, an information processing program, an information processing method, and an information processing device are proposed that determine whether or not a ratio of a sum set obtained by combining different conditions for a universal set that contains the different conditions is equal to or more than a threshold, for a plurality of hypotheses that indicates a same first causal relationship under the different conditions, stored in a storage unit that stores a hypothesis that indicates a causal relationship between elements and, in a case where the ratio is equal to or more than the threshold, when a hypothesis that indicates the first causal relationship with an undetermined condition, different from the plurality of hypotheses, is stored in the storage unit, delete the hypothesis from the storage unit.

### ADVANTAGEOUS EFFECTS OF INVENTION

According to one aspect, it is possible to appropriately update a storage unit.

### BRIEF DESCRIPTION OF DRAWINGS

FIG. 1 is an explanatory diagram illustrating an example of an information processing method according to an embodiment.
FIG. 2 is an explanatory diagram illustrating another example of the information processing method according to the embodiment.
FIG. 3 is an explanatory diagram illustrating an example of an information processing system 300.
FIG. 4 is a block diagram illustrating a hardware configuration example of an information processing device 100.
FIG. 5 is an explanatory diagram illustrating an example of storage content of an enhanced knowledge DB.
FIG. 6 is a block diagram illustrating a functional configuration example of the information processing device 100.
FIG. 7 is a block diagram illustrating a functional configuration example of the information processing system 300.
FIG. 8 is an explanatory diagram illustrating an operation example 1 of the information processing device 100.
FIG. 9 is an explanatory diagram illustrating an operation example 2 of the information processing device 100.
FIG. 10 is an explanatory diagram illustrating an operation example 3 of the information processing device 100.
FIG. 11 is an explanatory diagram illustrating an operation example 4 of the information processing device 100.
FIG. 12 is an explanatory diagram illustrating an operation example 5 of the information processing device 100.
FIG. 13 is an explanatory diagram illustrating an operation example 6 of the information processing device 100.
FIG. 14 is a flowchart illustrating an example of a first addition processing procedure.
FIG. 15 is a flowchart illustrating an example of a first contraction processing procedure.
FIG. 16 is a flowchart illustrating an example of a second addition processing procedure.
FIG. 17 is a flowchart illustrating an example of a second contraction processing procedure.

### DESCRIPTION OF EMBODIMENTS

Hereinafter, an embodiment of an information processing program, an information processing method, and an information processing device according to the present invention will be described in detail, with reference to the drawings.

### (Example of Information Processing Method According to Embodiment)

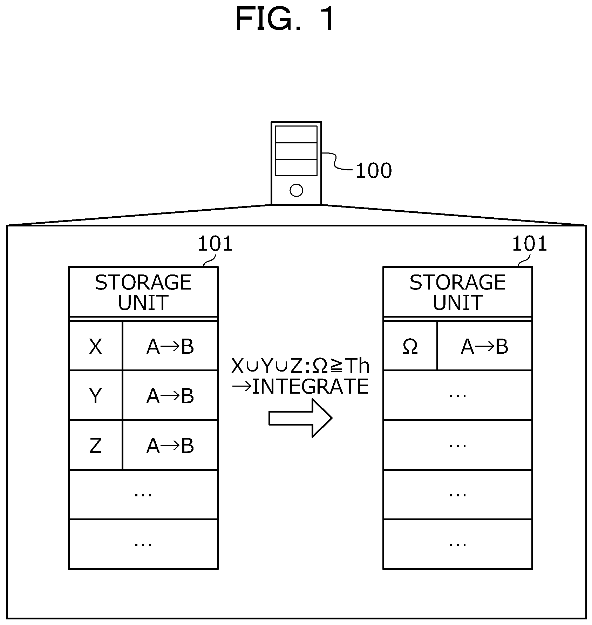

FIG. 1 is an explanatory diagram illustrating an example of an information processing method according to an embodiment. An information processing device 100 is a computer that enables to appropriately update a storage unit. The information processing device 100 is, for example, a server, a personal computer (PC), or the like.

The storage unit stores, for example, a hypothesis indicating a causal relationship between elements. The storage unit is, for example, an existing knowledge DB that stores a hypothesis indicating a causal relationship with an undetermined condition, estimated without considering a condition. The condition is expressed by a combination of one or more elements. The hypothesis indicates, for example, a causal relationship between an element indicating a gene and an element indicating a disease. The hypothesis indicates, for example, a causal relationship between an element indicating a material and an element indicating a physical property.

The hypothesis indicates, for example, a causal relationship that an element B is established if an element A is established. In the following description, there is a case where the causal relationship that the element B is established if the element A is established is referred to as "A → B". The hypothesis may indicate, for example, a causal relationship that the element B is established if the element A is not established, a causal relationship that the element B is not established if the element A is established, or the like.

Here, there is a case where it is desirable to add a new hypothesis to the existing knowledge DB. For example, a case is considered where new hypotheses indicating a causal relationship between elements under some conditions are sequentially estimated by an AI. In this case, it is considered to add the new hypothesis to the existing knowledge DB, each time when the new hypothesis is estimated by the AI.

Typically, there is a case where it is difficult to appropriately update the existing knowledge DB. For example, if formats of a hypothesis that can be stored in the existing knowledge DB and the new hypothesis estimated by the AI are different, it is difficult to add the new hypothesis estimated by the AI, to the existing knowledge DB. Specifically, a case is considered where the existing knowledge DB includes a field in which a causal relationship is set, does not include a field in which a condition is set, and stores only the hypothesis indicating the causal relationship between the elements with an undetermined condition. In this case, in the existing knowledge DB, it is not possible to store a new hypothesis indicating a causal relationship between elements under a specific condition, estimated by the AI, as it is.

On the other hand, it is considered to enhance the existing knowledge DB to be able to store the new hypothesis estimated by the AI. For example, a case is considered where the field in which the condition is set is added to the existing knowledge DB. In this case, in a field in which a condition is set, for a hypothesis that has been stored in the existing knowledge DB, a character Φ indicating an undetermined condition is set. Then, the new hypothesis indicating the causal relationship between the elements under the specific condition, estimated by the AI is added to the enhanced knowledge DB.

However, how to integrate and store the hypothesis indicating the causal relationship with the undetermined condition stored in the existing knowledge DB and the new hypothesis indicating the same causal relationship under the specific condition estimated by the AI is unknown. Therefore, there is a case where it is difficult to appropriately update the knowledge DB. For example, there is a case where it is difficult to add a new hypothesis estimated by the AI to the existing knowledge DB, in consideration of a relationship between the hypothesis that has been stored in the existing knowledge DB and the new hypothesis estimated by the AI. Furthermore, there is a problem that it is difficult to suppress an increase in a data amount of the existing knowledge DB.

Therefore, in the present embodiment, an information processing method that enables to appropriately update the storage unit will be described.

In FIG. 1, the information processing device 100 includes a storage unit 101. The storage unit 101 stores a hypothesis indicating a causal relationship between elements. For example, the storage unit 101 may store a plurality of hypotheses indicating a same first causal relationship under different conditions. The condition is, for example, expressed by a combination of one or more elements. A plurality of elements that may be used to express the causal relationship and a plurality of elements that may be used to express the condition may include the same element.

(1-1) The information processing device 100 calculates a ratio of a sum set obtained by combining different conditions for a universal set containing different conditions, for the plurality of hypotheses indicating the same first causal relationship under the different conditions, stored in the storage unit 101. For example, the information processing device 100 calculates a ratio of the number of elements used for the sum set containing the different conditions, with respect to the number of elements that may be used to express the condition. The information processing device 100 determines whether or not the calculated ratio is equal to or more than a threshold. The threshold is, for example, preset by a user. As a result, it is possible to obtain a guideline for determining how to preferably update storage content of the storage unit 101.

(1-2) The information processing device 100 adds a first hypothesis unconditionally indicating the first causal relationship, different from the plurality of hypotheses, to the storage unit 101, in a case where the calculated ratio is equal to or more than the threshold. No condition is, for example, expressed by Ω**.** As a result, the information processing device 100 can appropriately update the storage unit 101. For example, after adding the first hypothesis, the information processing device 100 can delete the plurality of hypotheses from the storage unit 101 and can suppress an increase in a data amount of the storage unit 101.

The information processing device 100 can determine that a degree of certainty at which the first causal relationship is unconditionally established is relatively small until the sum set obtained by combining the different conditions increases to be larger than a certain value or more, and can store the hypothesis indicating the first causal relationship in the storage unit 101 and appropriately manage the hypothesis, for each individual condition. On the other hand, the information processing device 100 can determine that the degree of certainty at which the first causal relationship is unconditionally established is relatively large, if the sum set obtained by combining the different conditions increases to be larger than the certain value or more, and can add the first hypothesis unconditionally indicating the first causal relationship to the storage unit 101 and can appropriately manage the first hypothesis.

In this way, the information processing device 100 can appropriately manage the hypothesis indicating the first causal relationship in the storage unit 101, according to the degree of certainty at which the first causal relationship is unconditionally established and can appropriately update the storage unit 101.

Here, a case has been described where the information processing device 100 includes the storage unit 101. However, the present invention is not limited to this. For example, there may be a case where another computer other than the information processing device 100 includes the storage unit 101. For example, there may be a case where the information processing device 100 can access the storage unit 101 included in the another computer.

Here, a case has been described where the information processing device 100 operates independently. However, the present invention is not limited to this. For example, there may be a case where the information processing device 100 cooperates with another computer. For example, there may be a case where a plurality of computers implements functions as the information processing device 100. Specifically, there may be a case where the function as the information processing device 100 is implemented on a cloud.

### (Another Example of Information Processing Method According to Embodiment)

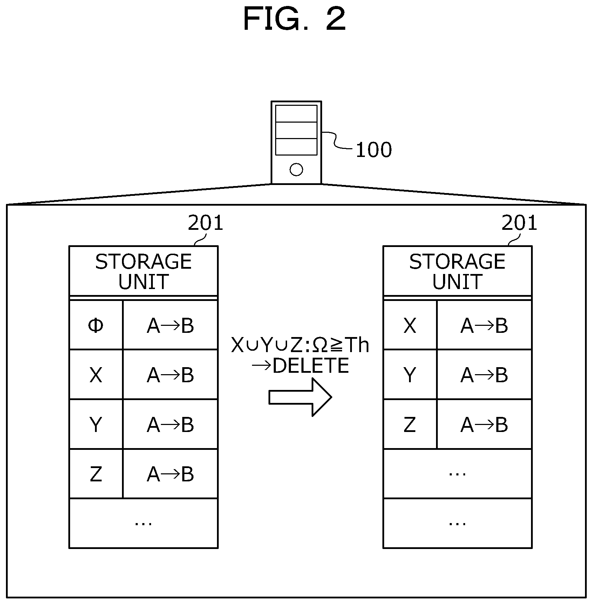

Next, another example of the information processing method according to the embodiment will be described with reference to FIG. 2. FIG. 2 is an explanatory diagram illustrating another example of the information processing method according to the embodiment.

In FIG. 2, the information processing device 100 includes a storage unit 201. The storage unit 201 stores a hypothesis indicating a causal relationship between elements. The storage unit 201 may store a second hypothesis indicating the first causal relationship with an undetermined condition. The undetermined condition is, for example, expressed by Φ. For example, the storage unit 201 may store the plurality of hypotheses indicating the same first causal relationship under the different conditions. The condition is, for example, expressed by a combination of one or more elements. A plurality of elements that may be used to express the causal relationship and a plurality of elements that may be used to express the condition may include the same element.

(2-1) The information processing device 100 calculates a ratio of a sum set obtained by combining different conditions for a universal set containing different conditions, for the plurality of hypotheses indicating the same first causal relationship under the different conditions, stored in the storage unit 201. For example, the information processing device 100 calculates a ratio of the number of elements used for the sum set containing the different conditions, with respect to the number of elements that may be used to express the condition. The information processing device 100 determines whether or not the calculated ratio is equal to or more than a threshold. The threshold is, for example, preset by the user. As a result, it is possible to obtain a guideline for determining how to preferably update storage content of the storage unit 201.

(2-2) In a case where the calculated ratio is equal to or more than the threshold, if the second hypothesis, indicating the first causal relationship with an undetermined condition, different from the plurality of hypotheses is stored in the storage unit 201, the information processing device 100 deletes the second hypothesis from the storage unit 201. As a result, the information processing device 100 can appropriately update the storage unit 201. For example, the information processing device 100 can delete the second hypothesis and suppress an increase in a data amount of the storage unit 201.

The information processing device 100 can determine that the first causal relationship is provisionally unconditionally established, although the condition is not determined, until the sum set obtained by combining the different conditions increases to a certain value or more, and can keep to store the second hypothesis in the storage unit 201. Therefore, the information processing device 100 can appropriately manage the storage unit 201 so as to respect the second hypothesis obtained by existing study or the like.

On the other hand, if the sum set obtained by combining the different conditions increases to the certain value or more, the information processing device 100 can determine that the first causal relationship is established under a condition wider than a certain condition. There is a case where the second hypothesis does not consider whether or not the first causal relationship is established under another condition that is not contained in the sum set obtained by combining the different conditions. The information processing device 100 can delete the second hypothesis from the storage unit 201, in consideration of a possibility that the second hypothesis is generated without determining whether or not the first causal relationship is established under the another condition, in the existing study.

Therefore, the information processing device 100 can appropriately update the storage unit 201, so as to distinguish a condition that is determined to satisfy the first causal relationship and a condition with which it is not determined that the first causal relationship is established. The information processing device 100 can determine whether or not it is preferable to study under which condition the first causal relationship is established and contribute to the studies in the future.

In this way, the information processing device 100 can appropriately manage the second hypothesis indicating the first causal relationship with an undetermined condition and the plurality of hypotheses indicating the same first causal relationship under the different conditions, as estimating and considering a range of the condition considered in the existing studies. The information processing device 100 can appropriately update the storage unit 201.

Here, a case has been described where the information processing device 100 includes the storage unit 201. However, the present invention is not limited to this. For example, there may be a case where another computer other than the information processing device 100 includes the storage unit 201. For example, there may be a case where the information processing device 100 can access the storage unit 201 included in the another computer.

Here, a case has been described where the information processing device 100 operates independently. However, the present invention is not limited to this. For example, there may be a case where the information processing device 100 cooperates with another computer. For example, there may be a case where a plurality of computers implements the functions as the information processing device 100. Specifically, there may be a case where the function as the information processing device 100 is implemented on a cloud.

Here, there may be a case where the information processing device 100 has both of the function for implementing the example described above and the function for implementing the another example described above. There may be a case where the information processing device 100 has only one of the function for implementing the example described above and the function for implementing the another example described above. In the following described, a case will be mainly described where the information processing device 100 has both of the function for implementing the example described above and the function for implementing the another example described above.

### (Example of Information Processing System 300)

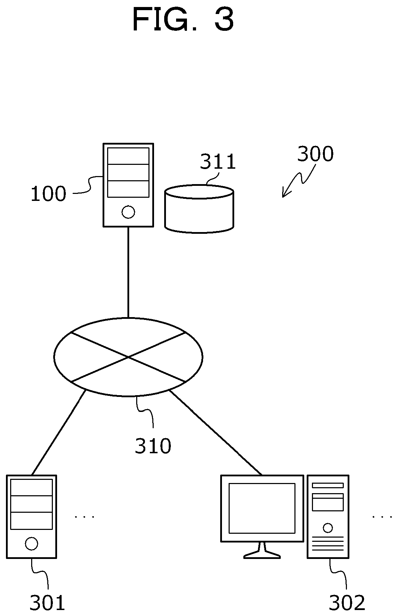

Next, an example of an information processing system 300 to which the information processing device 100 illustrated in FIG. 1 or 2 is applied will be described with reference to FIG. 3.

FIG. 3 is an explanatory diagram illustrating an example of the information processing system 300. In FIG. 3, the information processing system 300 includes the information processing device 100, a knowledge training device 301, and a client device 302.

In the information processing system 300, the information processing device 100 and the knowledge training device 301 are coupled via a wired or wireless network 310. The network 310 is, for example, a local area network (LAN), a wide area network (WAN), the Internet, or the like. In the information processing system 300, the information processing device 100 and the client device 302 are coupled via the wired or wireless network 310.

The information processing device 100 is a computer that manages a storage unit 311. The storage unit 311 stores a hypothesis indicating a causal relationship between elements. The storage unit 311 may store a hypothesis indicating the first causal relationship with an undetermined condition. For example, the storage unit 311 may store the plurality of hypotheses indicating the same first causal relationship under the different conditions. The condition is, for example, expressed by a combination of one or more elements. A plurality of elements that may be used to express the causal relationship and a plurality of elements that may be used to express the condition may include the same element.

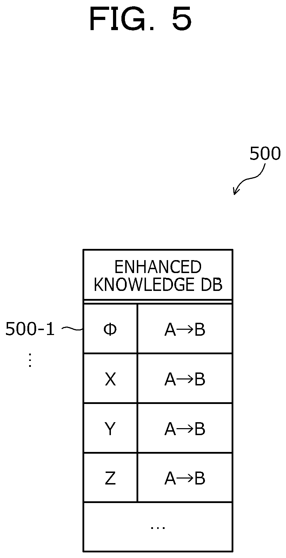

The storage unit 311 may be included in the information processing device 100. There may be a case where the storage unit 311 is included in another computer other than the information processing device 100. In this case, the information processing device 100 can access the storage unit 311 included in the another computer. The storage unit 311 corresponds to the storage unit 101 illustrated in FIG. 1 or the storage unit 201 illustrated in FIG. 2. Specifically, the storage unit 311 is implemented by an enhanced knowledge DB 500 to be described later with reference to FIG. 5.

The information processing device 100 receives a new hypothesis indicating a causal relationship between elements, from the knowledge training device 301. The information processing device 100 adds the received new hypothesis to the storage unit 311.

The information processing device 100 calculates a ratio of a sum set obtained by combining different conditions for a universal set containing different conditions, for the plurality of hypotheses indicating the same first causal relationship under the different conditions, stored in the storage unit 311. The information processing device 100 determines whether or not the calculated ratio is equal to or more than a threshold. The threshold is, for example, preset by the user. The information processing device 100 updates the storage unit 311, based on the determined result.

The information processing device 100 receives an inquiry about storage content of the storage unit 311. The information processing device 100 receives the inquiry about the storage content of the storage unit 311, for example, from the knowledge training device 301 or the client device 302. The information processing device 100 transmits the storage content of the storage unit 311 to the knowledge training device 301 or the client device 302, in response to the inquiry. The information processing device 100 is used by, for example, a system administrator. The information processing device 100 is, for example, a server, a PC, or the like.

The knowledge training device 301 is a computer that trains a new hypothesis indicating a causal relationship between elements. The knowledge training device 301 trains, for example, the new hypothesis indicating the causal relationship between the elements, by the AI. Specifically, the knowledge training device 301 may transmit the inquiry about the storage content of the storage unit 311 to the information processing device 100 and receive the storage content of the storage unit 311 from the information processing device 100. Specifically, the knowledge training device 301 may train the new hypothesis indicating the causal relationship between the elements by the AI, with reference to the storage content of the storage unit 311. The knowledge training device 301 transmits the trained new hypothesis to the information processing device 100. The knowledge training device 301 is used by, for example, the system administrator. The knowledge training device 301 is, for example, a server, a PC, or the like

The client device 302 is a computer used by a system user. The client device 302 transmits the inquiry about the storage content of the storage unit 311 to the information processing device 100, based on an operation input of the system user. The client device 302 receives the storage content of the storage unit 311, from the information processing device 100. The client device 302 outputs the storage content of the storage unit 311 so that the system user can refer to the storage content. The client device 302 is, for example, a PC, a tablet terminal, a smartphone, or the like.

Here, a case has been described where the information processing device 100 is a device different from the knowledge training device 301. However, the present invention is not limited to this. For example, there may be a case where the information processing device 100 has a function as the knowledge training device 301 and operates as the knowledge training device 301.

Here, a case has been described where the information processing device 100 is a device different from the client device 302. However, the present invention is not limited to this. For example, there may be a case where the information processing device 100 has a function as the client device 302 and also operates as the client device 302.

### (Usage Example of Information Processing System 300)

Next, a usage example of the information processing system 300 illustrated in FIG. 3 will be described. For example, the information processing system 300 can be applied to a field of material research. Specifically, the information processing system 300 can be applied to a field for searching for a catalyst used to produce a material having a preferable physical property. The storage unit 311 stores, for example, a hypothesis indicating a causal relationship between the catalyst and the physical property. As a result, the information processing system 300 can easily search for the catalyst used to produce the material having the preferable physical property.

For example, the information processing system 300 can be applied to a field of genetic research. Specifically, the information processing system 300 can be applied to a field for verifying a relationship between a specific gene and a disease. The storage unit 311 stores, for example, a hypothesis indicating a causal relationship between the gene and the disease. As a result, the information processing system 300 can easily verify the relationship between the specific gene and the disease.

### (Hardware Configuration Example of Information Processing Device 100)

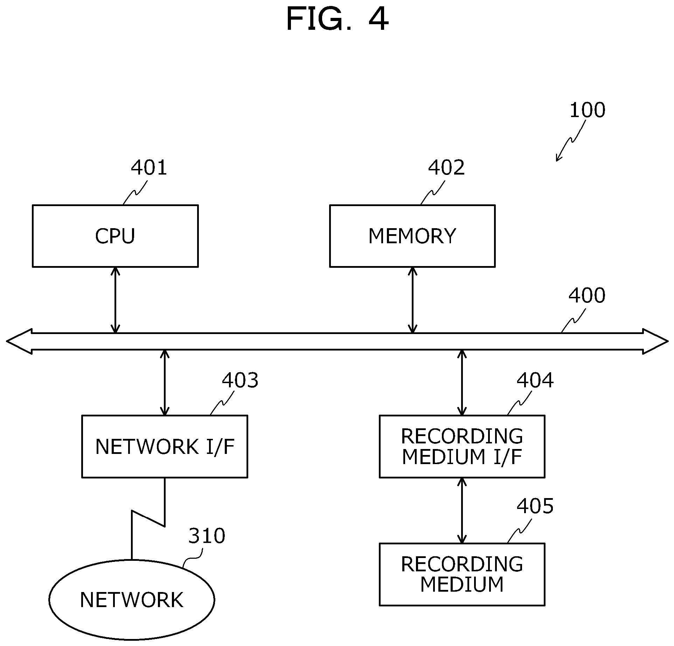

Next, a hardware configuration example of the information processing device 100 will be described with reference to FIG. 4.

FIG. 4 is a block diagram illustrating the hardware configuration example of the information processing device 100. In FIG. 4, the information processing device 100 includes a central processing unit (CPU) 401, a memory 402, a network interface (I/F) 403, a recording medium I/F 404, and a recording medium 405. Furthermore, the respective components are coupled to each other by a bus 400.

Here, the CPU 401 takes overall control of the information processing device 100. The memory 402 includes, for example, a read only memory (ROM), a random access memory (RAM), a flash ROM, and the like. Specifically, for example, the flash ROM or the ROM stores various programs, and the RAM is used as a work area for the CPU 401. The programs stored in the memory 402 are loaded into the CPU 401 to cause the CPU 401 to execute coded processing.

The network I/F 403 is coupled to the network 310 via a communication line, and is coupled to another computer via the network 310. Then, the network I/F 403 serves as an interface between the network 310 and the inside to control an input and an output of data to and from the another computer. The network I/F 403 is, for example, a modem, a LAN adapter, or the like.

The recording medium I/F 404 controls reading and writing of data from and to the recording medium 405 under the control of the CPU 401. The recording medium I/F 404 is, for example, a disk drive, a solid state drive (SSD), a universal serial bus (USB) port, or the like. The recording medium 405 is a nonvolatile memory that stores data written under the control of the recording medium I/F 404. The recording medium 405 is, for example, a disk, a semiconductor memory, a USB memory, or the like. The recording medium 405 may be attachable to and detachable from the information processing device 100.

For example, the information processing device 100 may include a keyboard, a mouse, a display, a printer, a scanner, a microphone, a speaker, or the like in addition to the components described above. Furthermore, the information processing device 100 may include a plurality of the recording medium I/Fs 404 and the recording media 405. In addition, the information processing device 100 does not have to include the recording medium I/F 404 or the recording medium 405.

### (Storage Content of Enhanced Knowledge DB 500)

Next, an example of storage content of the enhanced knowledge DB 500 will be described with reference to FIG. 5. The enhanced knowledge DB 500 is implemented by, for example, a storage region such as the memory 402 or the recording medium 405 of the information processing device 100 illustrated in FIG. 4.

FIG. 5 is an explanatory diagram illustrating an example of the storage content of the enhanced knowledge DB 500. As illustrated in FIG. 5, the enhanced knowledge DB 500 includes fields of a condition and a causal relationship. In the enhanced knowledge DB 500, by setting information to each field for each hypothesis, hypothesis information is stored as a record 500-a. The reference a represents an arbitrary integer.

In the field of the condition, a condition forming a hypothesis is set. In the field of the condition, for example, a condition expressed by a combination of one or more elements is set. In the field of the condition, for example, Φ indicating that the condition is undetermined may be set. In the field of the condition, for example, Ω indicating no condition may be set. In the field of the causal relationship, a causal relationship forming the hypothesis under the above condition is set.

### (Hardware Configuration Example of Knowledge Training Device 301)

Specifically, since a hardware configuration example of the knowledge training device 301 is similar to the hardware configuration example of the information processing device 100 illustrated in FIG. 4, description thereof is omitted.

### (Hardware Configuration Example of Client Device 302)

Specifically, since a hardware configuration example of the client device 302 is similar to the hardware configuration example of the information processing device 100 illustrated in FIG. 4, description thereof is omitted.

### (Functional Configuration Example of Information Processing Device 100)

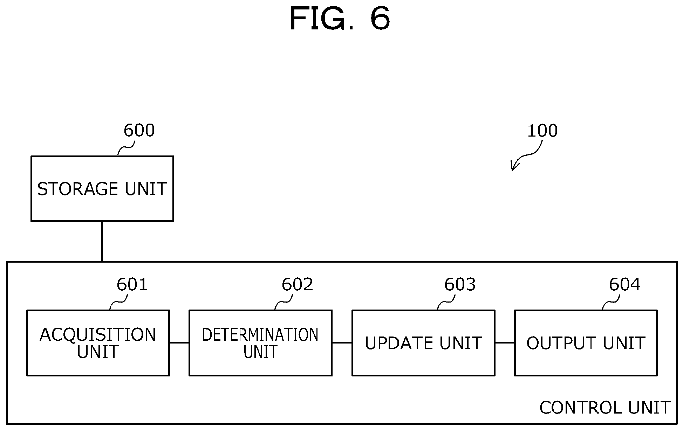

Next, a functional configuration example of the information processing device 100 will be described with reference to FIG. 6.

FIG. 6 is a block diagram illustrating the functional configuration example of the information processing device 100. The information processing device 100 includes a storage unit 600, an acquisition unit 601, a determination unit 602, an update unit 603, and an output unit 604.

The storage unit 600 is implemented, for example, by the storage region such as the memory 402 or the recording medium 405 illustrated in FIG. 4. Hereinafter, a case will be described where the storage unit 600 is included in the information processing device 100. However, the present invention is not limited to this. For example, there may be a case where the storage unit 600 is included in a device different from the information processing device 100 and storage content of the storage unit 600 can be referred from the information processing device 100.

The acquisition unit 601 to the output unit 604 function as an example of a control unit. Specifically, for example, the acquisition unit 601 to the output unit 604 implement its functions by causing the CPU 401 to execute a program stored in the storage region such as the memory 402 or the recording medium 405 illustrated in FIG. 4 or by the network I/F 403. A processing result of each functional unit is stored in the storage region such as the memory 402 or the recording medium 405 illustrated in FIG. 4, for example.

The storage unit 600 stores various types of information to be referred or updated in processing of each functional unit. The storage unit 600 stores a hypothesis indicating a causal relationship between elements. For example, the storage unit 600 stores a plurality of hypotheses indicating the same causal relationship under different conditions. The condition is, for example, expressed by a combination of one or more elements. The element may be, for example, a value.

The storage unit 600 may store, for example, a hypothesis indicating a causal relationship with an undetermined condition. The undetermined condition may be provisionally treated as no condition. No condition contains, for example, all the conditions. The causal relationship with no condition is, for example, a causal relationship that is established under all conditions. The storage unit 600 may store, for example, the hypothesis unconditionally indicating the causal relationship. Specifically, the storage unit 600 stores the enhanced knowledge DB 500.

The acquisition unit 601 acquires various types of information used for the processing of each functional unit. The acquisition unit 601 stores the acquired various types of information in the storage unit 600 or outputs the acquired various types of information to each functional unit. Furthermore, the acquisition unit 601 may output various types of information stored in the storage unit 600, to each functional unit. The acquisition unit 601 acquires various types of information, for example, based on an operation input of a user of the own device. The acquisition unit 601 may receive various types of information, for example, from a device different from the information processing device 100.

For example, the acquisition unit 601 acquires a new hypothesis different from the plurality of hypotheses stored in the storage unit 600. Specifically, the acquisition unit 601 acquires a new hypothesis, by receiving an input of the new hypothesis, based on the operation input of the user of the own device. Specifically, the acquisition unit 601 may acquire the new hypothesis, by receiving the new hypothesis from another computer. The another computer is, for example, the knowledge training device 301.

The acquisition unit 601 acquires, for example, an output request of the storage content of the storage unit 600. Specifically, the acquisition unit 601 acquires an output request, by receiving an input of the output request, based on the operation input of the user of the own device. Specifically, the acquisition unit 601 may acquire the output request, by receiving the output request from another computer. The another computer is, for example, the client device 302.

The acquisition unit 601 may accept a start trigger to start processing of any one of functional units. The start trigger is, for example, a predetermined operation input by the user of the own device. The start trigger may be, for example, reception of predetermined information from another computer. The start trigger may be, for example, output of predetermined information by any one of the functional units. The start trigger may be, for example, detection of a signal that is output at each certain period of time from a timer.

For example, the acquisition unit 601 may accept acquisition of a new hypothesis as a start trigger to start processing of the determination unit 602 and the update unit 603. For example, the acquisition unit 601 may accept the acquisition of the output request as the start trigger to start processing of the output unit 604.

The determination unit 602 calculates a ratio of a sum set obtained by combining the different conditions for the universal set containing the different conditions, for the plurality of hypotheses indicating the same first causal relationship under the different conditions, stored in the storage unit 600. The universal set contains, for example, all the conditions. The ratio may be, for example, a guideline for updating the storage unit 600. The ratio may be, for example, a guideline for evaluating whether or not the first causal relationship is unconditionally established. The ratio may be, for example, a guideline for evaluating whether or not a certain level or more of the condition under which the first causal relationship is established is found.

For example, the determination unit 602 calculates a ratio of the number of elements used for the sum set, with respect to the number of elements that may be used to express the condition, for the plurality of hypotheses indicating the same first causal relationship under the different conditions, stored in the storage unit 600. For example, the number of elements that may be used to express the condition is set by the user of the own device in advance. For example, as the number of elements that may be used to express the condition, a total number of elements included in the storage unit 600, that is obtained by counting the elements used for all the hypotheses stored in the storage unit 600 without duplication may be set.

Here, a case is considered where the condition indicates a range of a value. In this case, for example, the determination unit 602 may calculate a ratio of a range of the value of the sum set, with respect to an entire range that the value may take, for the plurality of hypotheses indicating the same first causal relationship under the different conditions, stored in the storage unit 600. As a result, the determination unit 602 can obtain the guideline for updating the storage unit 600. The determination unit 602 can obtain, for example, the guideline for evaluating whether or not the first causal relationship is unconditionally established. The determination unit 602 can obtain, for example, the guideline for evaluating whether or not the certain level or more of the condition under which the first causal relationship is established is found.

The determination unit 602 determines whether or not the calculated ratio is equal to or more than a threshold. The threshold is preset by, for example, the user of the own device. As a result, the determination unit 602 can determine how to update the storage unit 600, by the update unit 603. For example, if the ratio is equal to or more than the threshold, the determination unit 602 can determine that a degree of certainty at which the first causal relationship is unconditionally established is relatively high. For example, if the ratio is equal to or more than the threshold, the determination unit 602 can determine that the certain level or more of the condition under which the first causal relationship is established is found.

The update unit 603 updates the storage content of the storage unit 600. For example, in a case where it is determined by the determination unit 602 that the ratio is equal to or more than the threshold, the update unit 603 adds the first hypothesis unconditionally indicating the first causal relationship, to the storage unit 600. The first hypothesis is a hypothesis different from the plurality of hypotheses indicating the same first causal relationship under the different conditions. As a result, in a case where the degree of certainty at which the first causal relationship is unconditionally established is relatively high, the update unit 603 can add the first hypothesis unconditionally indicating the first causal relationship, to the storage unit 600. Then, the update unit 603 can appropriately update the storage unit 600, so that the storage content of the storage unit 600 expresses a determined condition under which the first causal relationship is established.

For example, in a case where it is determined by the determination unit 602 that the ratio is equal to or more than the threshold, the update unit 603 deletes the plurality of hypotheses indicating the same first causal relationship under the different conditions, from the storage unit 600. Specifically, the update unit 603 deletes the plurality of hypotheses indicating the same first causal relationship under the different conditions, from the storage unit 600, instead of adding the first hypothesis to the storage unit 600. For example, in a case where it is determined by the determination unit 602 that the ratio is less than the threshold, the update unit 603 leaves the plurality of hypotheses indicating the same first causal relationship under the different conditions, in the storage unit 600.

As a result, since the plurality of hypotheses indicating the same first causal relationship under the different conditions is contained in the first hypothesis, the update unit 603 can determine that it is not necessary to store the plurality of hypotheses in the storage unit 600. Therefore, the update unit 603 can delete the plurality of hypotheses indicating the same first causal relationship under the different conditions from the storage unit 600 and can suppress an increase in a data amount of the storage unit 600. The update unit 603 can leave the plurality of hypotheses indicating the same first causal relationship under the different conditions in the storage unit 600, until the first hypothesis is added to the storage unit 600 and can control the storage unit 600 so as to respect the existing study.

For example, in a case where it is determined by the determination unit 602 that the ratio is equal to or more than the threshold, the update unit 603 deletes the second hypothesis indicating the first causal relationship with an undetermined condition, from the storage unit 600, if the second hypothesis indicating the first causal relationship with an undetermined condition is stored in the storage unit 600. The second hypothesis is a hypothesis different from the plurality of hypotheses indicating the same first causal relationship under the different conditions. Specifically, the update unit 603 deletes the second hypothesis indicating the first causal relationship with an undetermined condition, from the storage unit 600, instead of adding the first hypothesis to the storage unit 600. For example, in a case where the determination unit 602 determines that the ratio is less than the threshold, the update unit 603 leaves the second hypothesis indicating the first causal relationship with an undetermined condition, in the storage unit 600.

As a result, since the second hypothesis indicating the first causal relationship with an undetermined condition is contained in the first hypothesis, the update unit 603 can determine that it is not necessary to store the second hypothesis in the storage unit 600. Therefore, the update unit 603 can delete the second hypothesis indicating the first causal relationship with an undetermined condition from the storage unit 600, and can suppress the increase in the data amount of the storage unit 600. The update unit 603 can leave the second hypothesis indicating the first causal relationship with an undetermined condition, in the storage unit 600, until the first hypothesis is added to the storage unit 600 and can control the storage unit 600, so as to respect the existing study.

In a case where a third hypothesis indicating a first causal relationship under a new condition is acquired by the acquisition unit 601, the update unit 603 adds the input third hypothesis to the storage unit 600 if the first hypothesis is not stored in the storage unit 600. The third hypothesis is a hypothesis that is not stored in the storage unit 600 yet and is a hypothesis different from the plurality of hypotheses indicating the same first causal relationship under the different conditions. As a result, the update unit 603 can add the new hypothesis to the storage unit 600 and appropriately update the storage unit 600.

In a case where the third hypothesis indicating the first causal relationship under the new condition is acquired by the acquisition unit 601, the update unit 603 discards the input third hypothesis, if the first hypothesis is stored in the storage unit 600. As a result, if the first hypothesis that contains the third hypothesis has been stored in the storage unit 600, the update unit 603 does not need to add the third hypothesis to the storage unit 600 and can suppress the increase in the data amount of the storage unit 600. Furthermore, the update unit 603 can prevent the storage unit 600 from storing the first hypothesis and the third hypothesis contained in the first hypothesis at the same time. Therefore, the update unit 603 can set the storage content of the storage unit 600 in a format that can be intuitively grasped by the system user.

The output unit 604 outputs a processing result of at least any one of the functional units. The output format is, for example, display on a display, a print output to a printer, transmission to an external device by the network I/F 403, or storage in the storage region such as the memory 402 or the recording medium 405. As a result, the output unit 604 can make it possible for the own device user to be notified of the processing result of at least any one of the functional units, and may achieve improvement in convenience of the information processing device 100.

The output unit 604 outputs, for example, the storage content of the storage unit 600. Specifically, the output unit 604 can output the storage content of the storage unit 600 so that the system user can refer to the storage content, in response to acquisition of the output request by the acquisition unit 601. More specifically, the output unit 604 transmits the storage content of the storage unit 600 to the client device 302 that is a transmission source of the output request. As a result, the output unit 604 allows the system user to refer to the storage content of the storage unit 600.

Here, a case has been described where the determination unit 602 calculates the ratio of the sum set obtained by combining the different conditions, with respect to the universal set, for the plurality of hypotheses indicating the same first causal relationship under the different conditions contained in the universal set. However, the present invention is not limited to this. For example, there may be a case where the information processing device 100 adopts a first condition instead of the universal set.

Specifically, the determination unit 602 calculates the ratio of the sum set obtained by combining the different conditions for the first condition, for the plurality of hypotheses indicating the same first causal relationship under different conditions contained in the first condition, stored in the storage unit 600. The determination unit 602 determines whether or not the calculated ratio is equal to or more than the threshold.

As a result, the determination unit 602 can determine how to update the storage unit 600 by the update unit 603. For example, if the ratio is equal to or more than the threshold, the determination unit 602 can determine that a degree of certainty at which the first causal relationship is unconditionally established within the first condition is relatively high. For example, if the ratio is equal to or more than the threshold, the determination unit 602 can determine that the certain level or more of the individual conditions under which the first causal relationship is established, among the first condition, is found.

Specifically, in a case where the calculated ratio is equal to or more than the threshold, the update unit 603 adds the first hypothesis that unconditionally indicates the first causal relationship within the first condition, different from the plurality of hypotheses, to the storage unit 600. As a result, in a case where a degree of certainty at which the first causal relationship is unconditionally established within the first condition is relatively high, the update unit 603 can add the first hypothesis that unconditionally indicates the first causal relationship within the first condition, to the storage unit 600. Then, the update unit 603 can appropriately update the storage unit 600, so that the storage content of the storage unit 600 expresses the determined condition under which the first causal relationship is established.

Specifically, in a case where it is determined that the calculated ratio is equal to or more than the threshold, the update unit 603 deletes the plurality of hypotheses indicating the same first causal relationship under the different conditions contained in the first condition, from the storage unit 600. More specifically, the update unit 603 deletes the plurality of hypotheses indicating the same first causal relationship under the different conditions contained in the first condition, from the storage unit 600, instead of adding the first hypothesis to the storage unit 600. Specifically, in a case where it is determined that the ratio is less than the threshold, the update unit 603 leaves the plurality of hypotheses indicating the same first causal relationship under the different conditions contained in the first condition, in the storage unit 600.

As a result, since the plurality of hypotheses indicating the same first causal relationship under the different conditions contained in the first condition is contained in the first hypothesis, the update unit 603 can determine that it is not necessary to store the plurality of hypotheses in the storage unit 600. Therefore, the update unit 603 can delete the plurality of hypotheses indicating the same first causal relationship under the different conditions contained in the first condition, from the storage unit 600 and can suppress the increase in the data amount of the storage unit 600. The update unit 603 can leave the plurality of hypotheses indicating the same first causal relationship under the different conditions contained in the first condition in the storage unit 600, until the first hypothesis is added to the storage unit 600 and can control the storage unit 600 so as to respect the existing study.

Specifically, in a case where the calculated ratio is equal to or more than the threshold, if the second hypothesis provisionally indicating the first causal relationship under the first condition with an undetermined condition, different from the plurality of hypotheses, is stored in the storage unit 600, the update unit 603 deletes the second hypothesis from the storage unit 600. More specifically, the update unit 603 deletes the second hypothesis from the storage unit 600, instead of adding the first hypothesis to the storage unit 600. Specifically, in a case where the ratio is less than the threshold, the update unit 603 leaves the second hypothesis in the storage unit 600.

As a result, since the second hypothesis is contained in the first hypothesis, the update unit 603 can determine that it is not necessary to store the second hypothesis in the storage unit 600. Therefore, the update unit 603 can delete the second hypothesis from the storage unit 600 and suppress the increase in the data amount of the storage unit 600. The update unit 603 can leave the second hypothesis, in the storage unit 600, until the first hypothesis is added to the storage unit 600 and can control the storage unit 600, so as to respect the existing study.

### (Functional Configuration Example of Information Processing System 300)

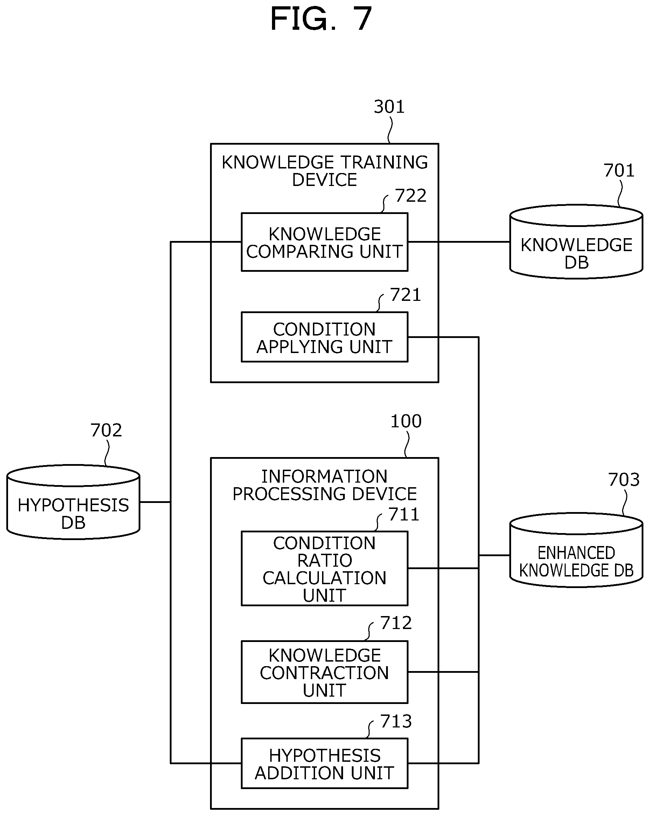

Next, a functional configuration example of the information processing system 300 will be described with reference to FIG. 7.

FIG. 7 is a block diagram illustrating the functional configuration example of the information processing system 300. In the information processing system 300, the information processing device 100 includes a condition ratio calculation unit 711, a knowledge contraction unit 712, and a hypothesis addition unit 713. The knowledge training device 301 includes a condition applying unit 721 and a knowledge comparing unit 722.

The knowledge training device 301 can access a knowledge DB 701 and a hypothesis DB 702. The knowledge training device 301 includes, for example, the knowledge DB 701. The information processing device 100 can access the hypothesis DB 702 and an enhanced knowledge DB 703. The enhanced knowledge DB 703 corresponds to, for example, the enhanced knowledge DB 500. The information processing device 100 includes, for example, the enhanced knowledge DB 703.

The knowledge DB 701 stores hypotheses obtained by existing studies. The knowledge DB 701 stores, for example, a hypothesis indicating a causal relationship between elements with an undetermined condition. The hypothesis DB 702 stores a new hypothesis generated by the knowledge training device 301. The hypothesis DB 702 stores, for example, a new conditional hypothesis, generated by the knowledge training device 301. Specifically, the hypothesis DB 702 stores a new hypothesis indicating a causal relationship between elements under a certain condition.

The enhanced knowledge DB 703 stores a conditional hypothesis. The enhanced knowledge DB 703 stores a hypothesis indicating a causal relationship between elements under a certain condition. The enhanced knowledge DB 703 may store a hypothesis corresponding to the hypothesis stored in the knowledge DB 701. Specifically, the enhanced knowledge DB 703 may store a hypothesis in which the symbol Φ indicating an undetermined condition is associated with a causal relationship indicated the hypothesis stored in the knowledge DB 701.

For example, it is considered that the information processing device 100 generates the hypothesis in which the symbol Φ indicating an undetermined condition is associated with the causal relationship indicated by the hypothesis stored in the knowledge DB 701 and adds the hypothesis to the enhanced knowledge DB 703.

The condition applying unit 721 specifies a condition to be verified, with reference to the enhanced knowledge DB 703 and outputs the condition to the knowledge comparing unit 722. The knowledge comparing unit 722 receives the condition to be verified and generates a new hypothesis indicating a causal relationship between elements under the target condition by the AI. The knowledge comparing unit 722 adds the generated new hypothesis to the hypothesis DB 702.

The condition ratio calculation unit 711 extracts one or more hypotheses indicating the causal relationship under the different conditions, for each causal relationship and calculates a condition ratio for the extracted one or more hypotheses. The condition ratio is a ratio of the number of elements used for a sum set obtained by combining the extracted one or more hypotheses, with respect to the number of elements that may be used to express the condition. As a result, the condition ratio calculation unit 711 can obtain a guideline for determining how to preferably update storage content of the enhanced knowledge DB 703.

The knowledge contraction unit 712 updates the storage content of the enhanced knowledge DB 703. The knowledge contraction unit 712 determines whether or not the calculated condition ratio is equal to or more than the threshold, for each causal relationship. The threshold is, for example, preset by the user. The knowledge contraction unit 712 updates the storage content of the enhanced knowledge DB 703, based on whether or not the calculated condition ratio is equal to or more than the threshold, for each causal relationship.

For example, regarding the first causal relationship, in a case where the calculated condition ratio is equal to or more than the threshold, the knowledge contraction unit 712 generates a new hypothesis that unconditionally indicates the first causal relationship and adds the new hypothesis to the enhanced knowledge DB 703. For example, regarding the first causal relationship, in a case where the calculated condition ratio is less than the threshold, the knowledge contraction unit 712 does not generate the new hypothesis that unconditionally indicates the first causal relationship.

As a result, in a case where the degree of certainty at which the first causal relationship is unconditionally established is relatively high, the knowledge contraction unit 712 can add the new hypothesis that unconditionally indicates the first causal relationship, to the enhanced knowledge DB 703. Then, the knowledge contraction unit 712 can appropriately update the storage content of the enhanced knowledge DB 703, so that the storage content of the enhanced knowledge DB 703 expresses the determined condition under which the first causal relationship is established.

For example, regarding the first causal relationship, in a case where the calculated condition ratio is equal to or more than the threshold, the knowledge contraction unit 712 deletes the one or more extracted hypotheses indicating the first causal relationship, from the enhanced knowledge DB 703, instead of adding the new hypothesis that unconditionally indicates the first causal relationship to the enhanced knowledge DB 703. For example, regarding the first causal relationship, in a case where the calculated condition ratio is less than the threshold, the knowledge contraction unit 712 does not delete the one or more extracted hypotheses indicating the first causal relationship from the enhanced knowledge DB 703.

Here, the one or more hypotheses indicating the first causal relationship under the different conditions are contained in the new hypothesis added to the enhanced knowledge DB 703. Therefore, the knowledge contraction unit 712 can determine that it is not necessary to store the one or more hypotheses indicating the first causal relationship under the different conditions, in the enhanced knowledge DB 703. The knowledge contraction unit 712 can delete the plurality of hypotheses indicating the same first causal relationship under the different conditions, from the enhanced knowledge DB 703 and can suppress an increase in a data amount of the enhanced knowledge DB 703.

For example, regarding the first causal relationship, in a case where the calculated condition ratio is equal to or more than the threshold, if the existing hypothesis indicating the first causal relationship with an undetermined condition exists in the enhanced knowledge DB 703, the knowledge contraction unit 712 deletes the existing hypothesis indicating the first causal relationship with an undetermined condition, from the enhanced knowledge DB 703. For example, regarding the first causal relationship, in a case where the calculated condition ratio is less than the threshold, the knowledge contraction unit 712 does not delete the existing hypothesis indicating the first causal relationship with an undetermined condition, from the enhanced knowledge DB 703.

As a result, the knowledge contraction unit 712 can delete the existing hypothesis indicating the first causal relationship with an undetermined condition, from the enhanced knowledge DB 703 and can suppress the increase in the data amount of the enhanced knowledge DB 703. The knowledge contraction unit 712 can appropriately update the storage content of the enhanced knowledge DB 703, so that the storage content of the enhanced knowledge DB 703 expresses the determined condition under which the first causal relationship is established.

Here, a case has been described where, regarding the first causal relationship, in a case where the calculated condition ratio is equal to or more than the threshold, the knowledge contraction unit 712 adds the new hypothesis that unconditionally indicates the first causal relationship to the enhanced knowledge DB 703. However, the present invention is not limited to this. For example, there may be a case where, regarding the first causal relationship, in a case where the calculated condition ratio is equal to or more than the threshold, the knowledge contraction unit 712 does not add the new hypothesis that unconditionally indicates the first causal relationship, to the enhanced knowledge DB 703.

The hypothesis addition unit 713 extracts the new hypothesis added to the hypothesis DB 702 and adds the new hypothesis to the enhanced knowledge DB 703. If the new hypothesis added to the hypothesis DB 702 is not contained in the hypothesis stored in the enhanced knowledge DB 703, the hypothesis addition unit 713 extracts the new hypothesis added to the hypothesis DB 702 and adds the new hypothesis to the enhanced knowledge DB 703. If the new hypothesis added to the hypothesis DB 702 is contained in the hypothesis stored in the enhanced knowledge DB 703, the hypothesis addition unit 713 does not extract the new hypothesis added to the hypothesis DB 702.

### (Operation Example of Information Processing Device 100)

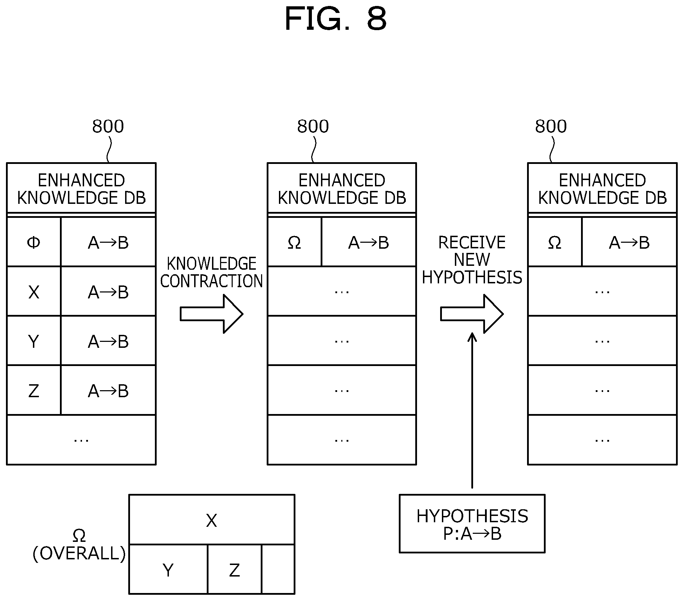

Next, an operation example of the information processing device 100 will be described with reference to FIGs. 8 to 13. First, an operation example 1 of the information processing device 100 will be described with reference to FIG. 8.

FIG. 8 is an explanatory diagram illustrating the operation example 1 of the information processing device 100. In FIG. 8, the information processing device 100 includes an enhanced knowledge DB 800. The enhanced knowledge DB 800 stores, for example, a hypothesis "X : A → B" indicating a causal relationship "A → B" under a condition X, a hypothesis "Y : A → B" indicating a causal relationship "A → B" under a condition Y, and a hypothesis "Z : A → B" indicating a causal relationship "A → B" under a condition Z.

For example, the enhanced knowledge DB 800 may store a hypothesis "Φ : A → B" indicating a causal relationship "A → B" with an undetermined condition. The reference Φ indicates an undetermined condition. Specifically, Φ is treated as a symbol that provisionally indicates a condition of the universal set Ω, although the condition is not determined. For example, Ω contains the conditions X, Y, and Z. Specifically, Ω contains all the conditions.

For example, since the information processing device 100 generates a hypothesis in which the symbol Φ indicating the undetermined condition is associated with a causal relationship indicated by a hypothesis stored in the existing knowledge DB and adds the hypothesis to the enhanced knowledge DB 800, there is a case where the enhanced knowledge DB 800 stores the hypothesis "Φ : A → B". The enhanced knowledge DB 800 corresponds to, for example, the enhanced knowledge DB 500.

The information processing device 100 reads one or more hypotheses indicating the causal relationship "A → B" under the different conditions, stored in the enhanced knowledge DB 800. The information processing device 100 reads, for example, a plurality of hypotheses including the hypothesis "X : A → B" indicating the causal relationship "A → B" under the condition X, the hypothesis "Y : A → B" indicating the causal relationship "A → B" under the condition Y, and the hypothesis "Z : A → B" indicating the causal relationship "A → B" under the condition Z.

The information processing device 100 calculates a condition ratio of the plurality of read hypotheses. For example, the information processing device 100 calculates a ratio of a sum set obtained by combining the conditions X, Y, and Z, with respect to the universal set Ω containing the conditions X, Y, and Z, as the condition ratio. Specifically, the information processing device 100 calculates a ratio of the number of elements that expresses a condition included in the sum set, with respect to a total number of elements that express a condition included in the universal set Ω, as the condition ratio. An example of calculating the condition ratio will be described later.

The information processing device 100 determines whether or not the calculated condition ratio is equal to or more than the threshold. The threshold is, for example, preset by the user. The threshold is, for example, 0 < ε ≤ 1. For example, in a case where the calculated condition ratio is equal to or more than the threshold, the information processing device 100 adds the hypothesis "Ω : A → B" that unconditionally indicates the causal relationship "A → B", to the enhanced knowledge DB 800. The reference Ω represents that the causal relationship "A → B" is established under any condition.

As a result, in a case where a degree of certainty at which the causal relationship "A → B" is unconditionally established is relatively high, the information processing device 100 can add the hypothesis "Ω : A → B" that unconditionally indicates the causal relationship "A → B", to the enhanced knowledge DB 800. The information processing device 100 can appropriately update storage content of the enhanced knowledge DB 800, so that the storage content of the enhanced knowledge DB 800 expresses the determined condition under which the causal relationship "A → B" is established.

In a case where the calculated condition ratio is equal to or more than the threshold, the information processing device 100 deletes the one or more read hypotheses, from the enhanced knowledge DB 800. For example, in a case where the calculated condition ratio is equal to or more than the threshold, the information processing device 100 deletes the hypotheses "X : A → B", "Y : A → B", and "Z : A → B", from the enhanced knowledge DB 800.

As a result, the information processing device 100 can determine that the hypotheses "X : A → B", "Y : A → B", and "Z : A → B" are determined to be contained in the hypothesis "Ω : A → B" and it is not necessary to store the hypotheses in the enhanced knowledge DB 800. The information processing device 100 can delete the hypotheses "X : A → B", "Y : A → B", and "Z : A → B" from the enhanced knowledge DB 800 and can suppress an increase in a data amount of the enhanced knowledge DB 800.

For example, in a case where the calculated condition ratio is equal to or more than the threshold, the information processing device 100 deletes the hypothesis "Φ : A → B" indicating the causal relationship "A → B" with an undetermined condition, from the enhanced knowledge DB 800. As a result, the information processing device 100 can suppress the increase in the data amount of the enhanced knowledge DB 800. The information processing device 100 can appropriately update the storage content of the enhanced knowledge DB 800, so that the storage content of the enhanced knowledge DB 800 expresses that a condition under which the causal relationship "A → B" is established is not undetermined.

Thereafter, it is assumed that the information processing device 100 acquire a new hypothesis "P : A → B" indicating the causal relationship "A → B" under a condition P. Since the new hypothesis "P : A → B" is contained in the hypothesis "Ω : A → B", the information processing device 100 discards the new hypothesis "P : A → B" without adding the new hypothesis "P : A → B to the enhanced knowledge DB 800.

In this way, since Ω indicates that it is determined that the causal relationship "A → B" is established under any condition, the information processing device 100 does not need to add the conditional causal relationship "A → B" to the enhanced knowledge DB 800 thereafter. As a result, the information processing device 100 can suppress the increase in the data amount of the enhanced knowledge DB 800.

When the user refers to the storage content of the enhanced knowledge DB 800, the information processing device 100 can prevent that both of the hypothesis "Ω : A → B" and the hypothesis "P : A → B" can be referred. Therefore, the information processing device 100 can prevent the user from misunderstanding the condition under which the causal relationship "A → B" is established.

For example, the information processing device 100 can prevent the user from being confused as to whether which one of the hypothesis "Ω : A → B" and the hypothesis "P : A → B" is appropriate. For example, the information processing device 100 can prevent the user from overlooking the hypothesis "Ω : A → B", referring to only the hypothesis "P : A → B", and misunderstanding the condition under which the causal relationship "A → B" is established.

Here, an example of calculating the condition ratio will be described. For example, there is a set Σ of all the elements for expressing the condition. The set Σ is a set obtained by extracting all elements used for the hypothesis of the enhanced knowledge DB 800 without duplication. Here, it is assumed that Σ = {A, B, C, D, E}. The condition is expressed by a logical expression using one or more elements of Σ. For example, X = A ∪ B. A condition ratio of a sum set of the conditions X, Y, Z, ... with respect to the universal set Ω is expressed as Rate (X, Y, Z, ..., Q) = | X ∪ Y ∪ Z ∪ ... | / | Σ |. |X| is the number of elements covered with a logical expression X. | Σ | is the number of elements included in Σ.

Specifically, a case is considered where a condition X = A ∪ B and a condition Y = C ∪ D are set. In this case, Rate (X, Y; Ω) = | X ∪ Y | / | Σ | = | A ∪ B ∪ C ∪ D | / | {A, B, C, D, E} | = 4 / 5 = 0.8.

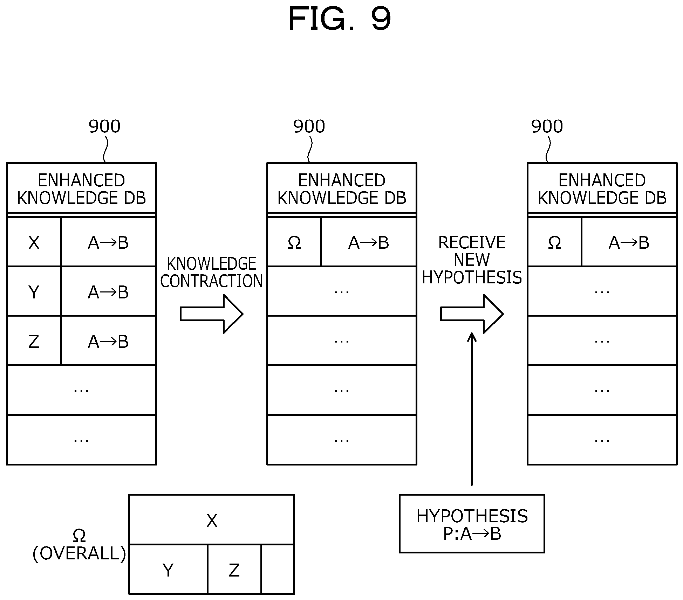

Specifically, a case is considered where the condition X = A ∩ C, the condition Y = B ∪ C, and the condition Z = D are set. In this case, X ∪ Y ∪ Z = (A ∩ C) ∪ (B ∪ C) ∪ D = (A ∪ B ∪ C ∪ D) ∩ (B ∪ C ∪ D) = B ∪ C ∪ D. Therefore, Rate (X, Y, Z; Ω) = | X ∪ Y ∪ Z | / | Σ | = | B ∪ C ∪ D | / | Σ | = 3 / 5 = 0.6. When calculating the Rate, the information processing device 100 does not need to consider an instance of observation data regarding the hypothesis. Next, an operation example 2 of the information processing device 100 will be described with reference to FIG. 9.

FIG. 9 is an explanatory diagram illustrating the operation example 2 of the information processing device 100. In FIG. 9, the information processing device 100 includes an enhanced knowledge DB 900. The enhanced knowledge DB 900 stores, for example, the hypothesis "X : A → B" indicating the causal relationship "A → B" under the condition X, the hypothesis "Y : A → B" indicating the causal relationship "A → B" under the condition Y, and the hypothesis "Z : A → B" indicating the causal relationship "A → B" under the condition Z.

The information processing device 100 reads one or more hypotheses indicating the causal relationship "A → B" under the different conditions, stored in the enhanced knowledge DB 900. The information processing device 100 reads, for example, the plurality of hypotheses including the hypothesis "X : A → B" indicating the causal relationship "A → B" under the condition X, the hypothesis "Y : A → B" indicating the causal relationship "A → B" under the condition Y, and the hypothesis "Z : A → B" indicating the causal relationship "A → B" under the condition Z.

The information processing device 100 calculates a condition ratio of the plurality of read hypotheses. For example, the information processing device 100 calculates a ratio of a sum set obtained by combining the conditions X, Y, and Z, with respect to the universal set Ω containing the conditions X, Y, and Z, as the condition ratio. Specifically, the information processing device 100 calculates the ratio of the number of elements that expresses the condition included in the sum set, with respect to the total number of elements that express the condition included in the universal set Ω, as the condition ratio.

The information processing device 100 determines whether or not the calculated condition ratio is equal to or more than the threshold. The threshold is, for example, preset by the user. The threshold is, for example, 0 < ε ≤ 1. For example, in a case where the calculated condition ratio is equal to or more than the threshold, the information processing device 100 adds the hypothesis "Ω : A → B" that unconditionally indicates the causal relationship "A → B", to the enhanced knowledge DB 900. The reference Ω represents that the causal relationship "A → B" is established under any condition.

As a result, in a case where a degree of certainty at which the causal relationship "A → B" is unconditionally established is relatively high, the information processing device 100 can add the hypothesis "Ω : A → B" that unconditionally indicates the causal relationship "A → B", to the enhanced knowledge DB 900. The information processing device 100 can appropriately update storage content of the enhanced knowledge DB 900, so that the storage content of the enhanced knowledge DB 900 expresses the determined condition under which the causal relationship "A → B" is established.

In a case where the calculated condition ratio is equal to or more than the threshold, the information processing device 100 deletes the one or more read hypotheses, from the enhanced knowledge DB 900. For example, in a case where the calculated condition ratio is equal to or more than the threshold, the information processing device 100 deletes the hypotheses "X : A → B", "Y : A → B", and "Z : A → B", from the enhanced knowledge DB 900.

As a result, the information processing device 100 can determine that the hypotheses "X : A → B", "Y : A → B", and "Z : A → B" are determined to be contained in the hypothesis "Ω : A → B" and it is not necessary to store the hypotheses in the enhanced knowledge DB 900. The information processing device 100 can delete the hypotheses "X : A → B", "Y : A → B", and "Z : A → B" from the enhanced knowledge DB 900 and can suppress an increase in a data amount of the enhanced knowledge DB 900.

Thereafter, it is assumed that the information processing device 100 acquire the new hypothesis "P : A → B" indicating the causal relationship "A → B" under the condition P. Since the new hypothesis "P : A → B" is contained in the hypothesis "Ω : A → B", the information processing device 100 discards the new hypothesis "P : A → B" without adding the new hypothesis "P : A → B" to the enhanced knowledge DB 900.

In this way, since Ω indicates that it is determined that the causal relationship "A → B" is established under any condition, the information processing device 100 does not need to add the conditional causal relationship "A → B" to the enhanced knowledge DB 900 thereafter. As a result, the information processing device 100 can suppress the increase in the data amount of the enhanced knowledge DB 900.

When the user refers to the storage content of the enhanced knowledge DB 900, the information processing device 100 can prevent that both of the hypothesis "Ω : A → B" and the hypothesis "P : A → B" can be referred. Therefore, the information processing device 100 can prevent the user from misunderstanding the condition under which the causal relationship "A → B" is established.

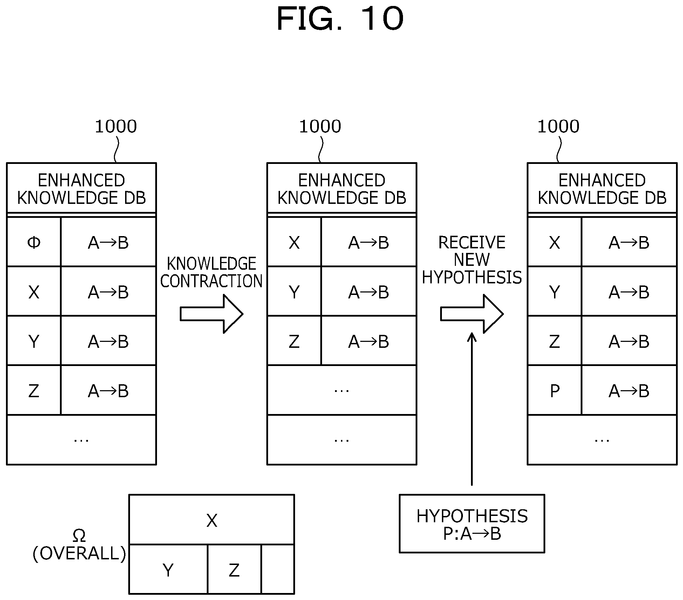

For example, the information processing device 100 can prevent the user from being confused as to whether which one of the hypothesis "Ω : A → B" and the hypothesis "P : A → B" is appropriate. For example, the information processing device 100 can prevent the user from overlooking the hypothesis "Ω : A → B", referring to only the hypothesis "P : A → B", and misunderstanding the condition under which the causal relationship "A → B" is established. Next, an operation example 3 of the information processing device 100 will be described with reference to FIG. 10.

FIG. 10 is an explanatory diagram illustrating the operation example 3 of the information processing device 100. In FIG. 10, the information processing device 100 includes an enhanced knowledge DB 1000. The enhanced knowledge DB 1000 stores, for example, the hypothesis "X : A → B" indicating the causal relationship "A → B" under the condition X, the hypothesis "Y : A → B" indicating the causal relationship "A → B" under the condition Y, and the hypothesis "Z : A → B" indicating the causal relationship "A → B" under the condition Z.

For example, the enhanced knowledge DB 1000 may store the hypothesis "Φ : A → B" indicating the causal relationship "A → B" with an undetermined condition. The reference Φ indicates an undetermined condition. Specifically, Φ is treated as the symbol that provisionally indicates the condition of the universal set Ω, although the condition is not determined. For example, Ω contains the conditions X, Y, and Z. Specifically, Ω contains all the conditions.

For example, since the information processing device 100 generates the hypothesis in which the symbol Φ indicating the undetermined condition is associated with the causal relationship indicated by the hypothesis stored in the existing knowledge DB and adds the hypothesis to the enhanced knowledge DB 1000, there is a case where the enhanced knowledge DB 1000 stores the hypothesis "Φ : A → B".

The information processing device 100 reads one or more hypotheses indicating the causal relationship "A → B" under the different conditions, stored in the enhanced knowledge DB 1000. The information processing device 100 reads, for example, the plurality of hypotheses including the hypothesis "X : A → B" indicating the causal relationship "A → B" under the condition X, the hypothesis "Y : A → B" indicating the causal relationship "A → B" under the condition Y, and the hypothesis "Z : A → B" indicating the causal relationship "A → B" under the condition Z.

The information processing device 100 calculates a condition ratio of the plurality of read hypotheses. For example, the information processing device 100 calculates a ratio of a sum set obtained by combining the conditions X, Y, and Z, with respect to the universal set Ω containing the conditions X, Y, and Z, as the condition ratio. Specifically, the information processing device 100 calculates the ratio of the number of elements that expresses the condition included in the sum set, with respect to the total number of elements that express the condition included in the universal set Ω, as the condition ratio.

The information processing device 100 determines whether or not the calculated condition ratio is equal to or more than the threshold. The threshold is, for example, preset by the user. The threshold is, for example, 0 < ε ≤ 1. For example, in a case where the calculated condition ratio is equal to or more than the threshold, the information processing device 100 deletes the hypothesis "Φ : A → B" indicating the causal relationship "A → B" with an undetermined condition, from the enhanced knowledge DB 1000. As a result, the information processing device 100 can suppress an increase in a data amount of the enhanced knowledge DB 1000.

The information processing device 100 can appropriately update storage content of the enhanced knowledge DB 1000 so that the storage content of the enhanced knowledge DB 1000 expresses a condition under which it is determined that the causal relationship "A → B" is established and an undetermined condition to be distinguishable from each other. The information processing device 100 can determine whether or not it is preferable to study under which condition the causal relationship "A → B" is established and contribute to the studies in the future.

The information processing device 100 can determine that the causal relationship "A → B" is unconditionally established although the condition is provisionally undetermined, until the calculated condition ratio becomes equal to or more than the threshold and can leave the hypothesis "Φ : A → B" in the enhanced knowledge DB 1000. Therefore, the information processing device 100 can appropriately manage the enhanced knowledge DB 1000, so as to respect the hypothesis "Φ : A → B" obtained by the existing study or the like.

Thereafter, it is assumed that the information processing device 100 acquire the new hypothesis "P : A → B" indicating the causal relationship "A → B" under the condition P. Since the new hypothesis "P : A → B" is not contained in the hypothesis stored in the enhanced knowledge DB 1000, the information processing device 100 adds the new hypothesis "P : A → B" to the enhanced knowledge DB 1000. As a result, the information processing device 100 can appropriately update the enhanced knowledge DB 1000.

As described above, the information processing device 100 can take the hypothesis stored in the existing knowledge DB into the enhanced knowledge DB without inconsistency, by using the symbol Φ indicating an undetermined condition. When a relatively large number of hypotheses indicating the same causal relationship under the different conditions are accumulated in the enhanced knowledge DB, the information processing device 100 can integrate the hypotheses using the symbol Ω representing the universal set and can suppress the increase in the data amount of the enhanced knowledge DB.

When a relatively large number of hypotheses indicating the same causal relationship under the different conditions are accumulated in the enhanced knowledge DB, the information processing device 100 can delete the hypothesis using the symbol Φ that provisionally indicates the universal set and can suppress the increase in the data amount of the enhanced knowledge DB. The information processing device 100 may selectively perform the operations illustrated in FIGs. 8 and 9 and the operation illustrated in FIG. 10, according to an update policy of the enhanced knowledge DB of the user.

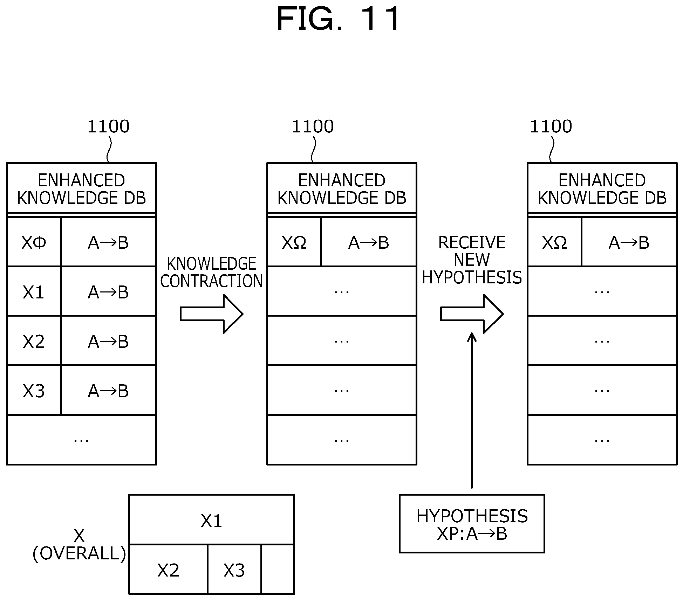

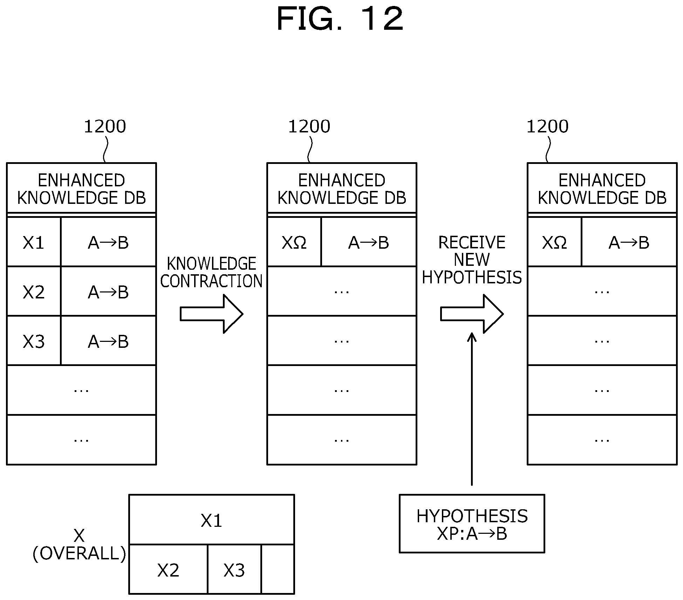

In the example in FIGs. 8 and 9, a case has been described where the information processing device 100 integrates the plurality of hypotheses using the conditions X, Y, and Z contained in the universal set Ω with the hypothesis using the universal set Ω containing all the conditions. However, the present invention is not limited to this. For example, there may be a case where the information processing device 100 integrates a plurality of hypotheses using conditions X1, X2, and X3 contained in a condition XΩ, with a hypothesis using the condition XΩ. Specifically, this case will be described later with reference to FIGs. 11 and 12.

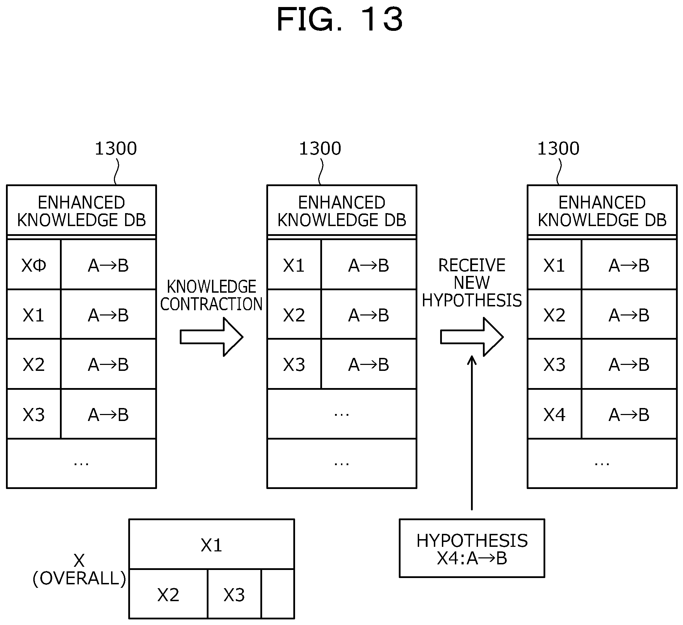

Similarly, in the example in FIG. 10, a case has been described where the information processing device 100 determines whether or not to delete the hypothesis using the symbol Φ of an undetermined condition, provisionally representing the condition of the universal set Ω, according to the number of determined conditional hypotheses. However, the present invention is not limited to this. For example, there may be a case where the information processing device 100 determines whether or not to delete the hypothesis using a symbol XΦ of an undetermined condition, provisionally representing the condition XΩ, according to the number of determined conditional hypotheses, contained in the condition XΩ. Specifically, this case will be described later with reference to FIG. 13. Next, an operation example 4 of the information processing device 100 will be described with reference to FIG. 11.

FIG. 11 is an explanatory diagram illustrating the operation example 4 of the information processing device 100. In FIG. 11, the information processing device 100 includes an enhanced knowledge DB 1100. The enhanced knowledge DB 1100 stores, for example, a hypothesis "X1 : A → B" indicating a causal relationship "A → B" under a condition X1, a hypothesis "X2 : A → B" indicating a causal relationship "A → B" under a condition X2, and a hypothesis "X3 : A → B" indicating a causal relationship "A → B" under a condition X3.

For example, the enhanced knowledge DB 1100 may store a hypothesis "XΦ : A → B" provisionally indicating a causal relationship "A → B" under the condition XΩ, with an undetermined condition. The symbol XΦ indicates an undetermined condition. Specifically, XΦ is used as a symbol that provisionally indicates the condition of the condition XΩ, although the condition is not determined. The reference XΩ contains, for example, the conditions X1, X2, and X3. The reference XΩ may contain, for example, another condition Xi. Where i = 4, 5, ... is satisfied.

For example, it is considered that the information processing device 100 generates a hypothesis in which the symbol XΦ indicating an undetermined condition within the condition X and the causal relationship treated as provisionally being established under the condition XΩ, indicated by the hypothesis stored in the existing knowledge DB are associated, and adds the hypothesis to the enhanced knowledge DB 1100. Therefore, there is a case where the enhanced knowledge DB 1100 stores the hypothesis "Φ : A → B".

The information processing device 100 reads one or more hypotheses indicating the causal relationship "A → B" under the different conditions contained in the condition XΩ, stored in the enhanced knowledge DB 1100. The information processing device 100 reads, for example, the plurality of hypotheses including the hypothesis "X1 : A → B" indicating the causal relationship "A → B", the hypothesis "X2 : A → B" indicating the causal relationship "A → B", and the hypothesis "X3 : A → B" indicating the causal relationship "A → B".

The information processing device 100 calculates a condition ratio of the plurality of read hypotheses. For example, the information processing device 100 calculates a ratio of a sum set obtained by combining the conditions X1, X2, and X3, with respect to the condition XΩ containing the conditions X1, X2, and X3, as the condition ratio. Specifically, the information processing device 100 calculates the ratio of the number of elements that express the condition included in the sum set, with respect to a total number of elements that express the condition included in the condition XΩ, as the condition ratio.

The information processing device 100 determines whether or not the calculated condition ratio is equal to or more than the threshold. The threshold is, for example, preset by the user. The threshold is, for example, 0 < ε ≤ 1. For example, in a case where the calculated condition ratio is equal to or more than the threshold, the information processing device 100 determines that the causal relationship "A → B" is established under the condition XΩ and adds a hypothesis "XΩ : A → B" that unconditionally indicates the causal relationship "A → B" within the condition XΩ, to the enhanced knowledge DB 1100. The reference XΩ represents that it is determined that the causal relationship "A → B" is established under any condition within the condition XΩ.

As a result, in a case where a degree of certainty at which the causal relationship "A → B" is unconditionally established within the condition XΩ is relatively high, the information processing device 100 can add the hypothesis "XΩ : A → B" that unconditionally indicates the causal relationship "A → B" within the condition XΩ, to the enhanced knowledge DB 1100. The information processing device 100 can appropriately update storage content of the enhanced knowledge DB 1100, so that the storage content of the enhanced knowledge DB 1100 expresses the determined condition under which the causal relationship "A → B" is established.

In a case where the calculated condition ratio is equal to or more than the threshold, the information processing device 100 deletes the one or more read hypotheses, from the enhanced knowledge DB 1100. For example, in a case where the calculated condition ratio is equal to or more than the threshold, the information processing device 100 deletes the hypotheses "X1 : A → B", "X2 : A → B" and "X3 : A → B", from the enhanced knowledge DB 1100.

As a result, the information processing device 100 can determine that the hypotheses "X1 : A → B", "X2 : A → B", and "X3 : A → B" are determined to be contained in the hypothesis "XΩ : A → B" and it is not necessary to store the hypotheses in the enhanced knowledge DB 1100. The information processing device 100 can delete the hypotheses "X1 : A → B", "X2 : A → B", and "X3 : A → B" from the enhanced knowledge DB 1100 and can suppress an increase in a data amount of the enhanced knowledge DB 1100.

For example, in a case where the calculated condition ratio is equal to or more than the threshold, the information processing device 100 deletes the hypothesis "XΦ : A → B" provisionally indicating the causal relationship "A → B" under the condition XΩ, with an undetermined condition, from the enhanced knowledge DB 1100. As a result, the information processing device 100 can suppress the increase in the data amount of the enhanced knowledge DB 1100. The information processing device 100 can appropriately update the storage content of the enhanced knowledge DB 1100, so that the storage content of the enhanced knowledge DB 1100 expresses that a condition under which the causal relationship "A → B" is established is not undetermined.

Thereafter, it is assumed that the information processing device 100 acquire a new hypothesis "XP : A → B" indicating the causal relationship "A → B" under a condition XP. Since the new hypothesis "XP : A → B" is contained in the hypothesis "XΩ : A → B", the information processing device 100 discards the new hypothesis "XP : A → B" without adding the new hypothesis "XP : A → B to the enhanced knowledge DB 1100.

In this way, since XΩ indicates that it is determined that the causal relationship "A → B" is established under any condition within the condition XΩ, the information processing device 100 does not need to add the conditional causal relationship "A → B" to the enhanced knowledge DB 1100 contained in the condition XΩ thereafter. As a result, the information processing device 100 can suppress the increase in the data amount of the enhanced knowledge DB 1100.

When the user refers to the storage content of the enhanced knowledge DB 1100, the information processing device 100 can prevent that both of the hypothesis "XΩ : A → B" and the hypothesis "XP : A → B" can be referred. Therefore, the information processing device 100 can prevent the user from misunderstanding the condition under which the causal relationship "A → B" is established.

For example, the information processing device 100 can prevent the user from being confused as to whether which one of the hypothesis "XΩ : A → B" and the hypothesis "XP : A → B" is appropriate. For example, the information processing device 100 can prevent the user from overlooking the hypothesis "XΩ : A → B", referring to only the hypothesis "XP : A → B", and misunderstanding the condition under which the causal relationship "A → B" is established. Next, an operation example 5 of the information processing device 100 will be described with reference to FIG. 12.

FIG. 12 is an explanatory diagram illustrating the operation example 5 of the information processing device 100. In FIG. 12, the information processing device 100 includes an enhanced knowledge DB 1200. The enhanced knowledge DB 1200 stores, for example, the hypothesis "X1 : A → B" indicating the causal relationship "A → B" under the condition X1, the hypothesis "X2 : A → B" indicating the causal relationship "A → B" under the condition X2, and the hypothesis "X3 : A → B" indicating the causal relationship "A → B" under the condition X3.

The information processing device 100 reads one or more hypotheses indicating the causal relationship "A → B" under the different conditions contained in the condition XΩ, stored in the enhanced knowledge DB 1200. The information processing device 100 reads, for example, the plurality of hypotheses including the hypothesis "X1 : A → B" indicating the causal relationship "A → B", the hypothesis "X2 : A → B" indicating the causal relationship "A → B", and the hypothesis "X3 : A → B" indicating the causal relationship "A → B".

The information processing device 100 calculates a condition ratio of the plurality of read hypotheses. For example, the information processing device 100 calculates a ratio of a sum set obtained by combining the conditions X1, X2, and X3, with respect to the condition XΩ containing the conditions X1, X2, and X3, as the condition ratio. Specifically, the information processing device 100 calculates the ratio of the number of elements that expresses the condition included in the sum set, with respect to a total number of elements that express the condition included in the condition XΩ, as the condition ratio.

The information processing device 100 determines whether or not the calculated condition ratio is equal to or more than the threshold. The threshold is, for example, preset by the user. The threshold is, for example, 0 < ε ≤ 1. For example, in a case where the calculated condition ratio is equal to or more than the threshold, the information processing device 100 adds the hypothesis "XΩ : A → B" that unconditionally indicates the causal relationship "A → B" within the condition XΩ, to the enhanced knowledge DB 1200. The reference XΩ represents that it is determined that the causal relationship "A → B" is established under any condition within the condition XΩ.

As a result, in a case where a degree of certainty at which the causal relationship "A → B" is unconditionally established within the condition XΩ is relatively high, the information processing device 100 can add the hypothesis "XΩ : A → B" that unconditionally indicates the causal relationship "A → B" within the condition XΩ, to the enhanced knowledge DB 1200. The information processing device 100 can appropriately update storage content of the enhanced knowledge DB 1200, so that the storage content of the enhanced knowledge DB 1200 expresses the determined condition under which the causal relationship "A → B" is established.

In a case where the calculated condition ratio is equal to or more than the threshold, the information processing device 100 deletes the one or more read hypotheses, from the enhanced knowledge DB 1200. For example, in a case where the calculated condition ratio is equal to or more than the threshold, the information processing device 100 deletes the hypotheses "X1 : A → B", "X2 : A → B" and "X3 : A → B", from the enhanced knowledge DB 1200.

As a result, the information processing device 100 can determine that the hypotheses "X1 : A → B", "X2 : A → B", and "X3 : A → B" are determined to be contained in the hypothesis "XΩ : A → B" and it is not necessary to store the hypotheses in the enhanced knowledge DB 1200. The information processing device 100 can delete the hypotheses "X1 : A → B", "X2 : A → B", and "X3 : A → B" from the enhanced knowledge DB 1200 and can suppress an increase in a data amount of the enhanced knowledge DB 1200.

Thereafter, it is assumed that the information processing device 100 acquire the new hypothesis "XP : A → B" indicating the causal relationship "A → B" under the condition XP. Since the new hypothesis "XP : A → B" is contained in the hypothesis "XΩ : A → B", the information processing device 100 discards the new hypothesis "XP : A → B" without adding the new hypothesis "XP : A → B" to the enhanced knowledge DB 1200.

In this way, since XΩ indicates that it is determined that the causal relationship "A → B" is established under any condition, the information processing device 100 does not need to add the conditional causal relationship "A → B" to the enhanced knowledge DB 1200 thereafter. As a result, the information processing device 100 can suppress the increase in the data amount of the enhanced knowledge DB 1200.

When the user refers to the storage content of the enhanced knowledge DB 1200, the information processing device 100 can prevent that both of the hypothesis "XΩ : A → B" and the hypothesis "XP : A → B" can be referred. Therefore, the information processing device 100 can prevent the user from misunderstanding the condition under which the causal relationship "A → B" is established.

For example, the information processing device 100 can prevent the user from being confused as to whether which one of the hypothesis "XΩ : A → B" and the hypothesis "XP : A → B" is appropriate. For example, the information processing device 100 can prevent the user from overlooking the hypothesis "XΩ : A → B", referring to only the hypothesis "XP : A → B", and misunderstanding the condition under which the causal relationship "A → B" is established. Next, an operation example 6 of the information processing device 100 will be described with reference to FIG. 13.

FIG. 13 is an explanatory diagram illustrating the operation example 6 of the information processing device 100. In FIG. 13, the information processing device 100 includes an enhanced knowledge DB 1300. The enhanced knowledge DB 1300 stores, for example, the hypothesis "X1 : A → B" indicating the causal relationship "A → B" under the condition X1, the hypothesis "X2 : A → B" indicating the causal relationship "A → B" under the condition X2, and the hypothesis "X3 : A → B" indicating the causal relationship "A → B" under the condition X3.

For example, the enhanced knowledge DB 1300 may store the hypothesis "XΦ : A → B" provisionally indicating the causal relationship "A → B" under the condition XΩ, with an undetermined condition. The symbol XΦ indicates an undetermined condition. Specifically, XΦ is used as a symbol that provisionally indicates the condition of the condition XΩ, although the condition is not determined. The reference XΩ contains, for example, the conditions X1, X2, and X3. The reference XΩ may contain, for example, the another condition Xi. Where i = 4, 5, ... is satisfied.

For example, it is considered that the information processing device 100 generates the hypothesis in which the symbol XΦ indicating an undetermined condition within the condition X and the causal relationship treated as provisionally being established under the condition XΩ, indicated by the hypothesis stored in the existing knowledge DB are associated, and adds the hypothesis to the enhanced knowledge DB 1300. Therefore, there is a case where the enhanced knowledge DB 1300 stores the hypothesis "Φ : A → B".

The information processing device 100 reads one or more hypotheses indicating the causal relationship "A → B" under the different conditions contained in the condition XΩ, stored in the enhanced knowledge DB 1300. The information processing device 100 reads, for example, the plurality of hypotheses including the hypothesis "X1 : A → B" indicating the causal relationship "A → B", the hypothesis "X2 : A → B" indicating the causal relationship "A → B", and the hypothesis "X3 : A → B" indicating the causal relationship "A → B".

The information processing device 100 calculates a condition ratio of the plurality of read hypotheses. For example, the information processing device 100 calculates a ratio of a sum set obtained by combining the conditions X1, X2, and X3, with respect to the condition XΩ containing the conditions X1, X2, and X3, as the condition ratio. Specifically, the information processing device 100 calculates the ratio of the number of elements that expresses the condition included in the sum set, with respect to a total number of elements that express the condition included in the condition XΩ, as the condition ratio.

The information processing device 100 determines whether or not the calculated condition ratio is equal to or more than the threshold. The threshold is, for example, preset by the user. The threshold is, for example, 0 < ε ≤ 1. For example, in a case where the calculated condition ratio is equal to or more than the threshold, the information processing device 100 deletes the hypothesis "XΦ : A → B" provisionally indicating the causal relationship "A → B" under the condition XΩ, with an undetermined condition, from the enhanced knowledge DB 1300. As a result, the information processing device 100 can suppress an increase in a data amount of the enhanced knowledge DB 1300.

The information processing device 100 can appropriately update storage content of the enhanced knowledge DB 1300 so that the storage content of the enhanced knowledge DB 1300 expresses a condition under which it is determined that the causal relationship "A → B" is established and an undetermined condition to be distinguishable from each other. The information processing device 100 can determine whether or not it is preferable to study under which condition the causal relationship "A → B" is established and contribute to the studies in the future.

The information processing device 100 can determine that the causal relationship "A → B" is provisionally unconditionally established within the condition XΩ, with an undetermined condition, until the calculated condition ratio becomes equal to or more than the threshold and can leave the hypothesis "XΦ : A → B" in the enhanced knowledge DB 1300. Therefore, the information processing device 100 can appropriately manage the enhanced knowledge DB 1300, so as to respect the hypothesis "XΦ : A → B" obtained by the existing study or the like.

Thereafter, it is assumed that the information processing device 100 acquire a new hypothesis "X4 : A → B" indicating a causal relationship "A → B" under a condition X4. Since the new hypothesis "X4 : A → B" is not contained in the hypothesis stored in the enhanced knowledge DB 1300, the information processing device 100 adds the new hypothesis "X4 : A → B" to the enhanced knowledge DB 1300. As a result, the information processing device 100 can appropriately update the enhanced knowledge DB 1300.

As described above, the information processing device 100 can take the hypothesis stored in the existing knowledge DB into the enhanced knowledge DB without inconsistency, by using the symbol XΦ indicating an undetermined condition. When a relatively large number of hypotheses indicating the same causal relationship under the different conditions contained in the condition XΩ are accumulated in the enhanced knowledge DB, the information processing device 100 can integrate the hypotheses, using the symbol XΩ representing the condition. Therefore, the information processing device 100 can suppress the increase in the data amount of the enhanced knowledge DB.

When a relatively large number of hypotheses indicating the same causal relationship under the different conditions contained in the condition XΩ are accumulated in the enhanced knowledge DB, the information processing device 100 can provisionally delete the hypothesis using the symbol XΦ representing the condition XΩ. Therefore, the information processing device 100 can suppress the increase in the data amount of the enhanced knowledge DB. The information processing device 100 may selectively perform the operations illustrated in FIGs. 11 and 12 and the operation illustrated in FIG. 13, according to the update policy of the enhanced knowledge DB of the user.

### (First Addition Processing Procedure)

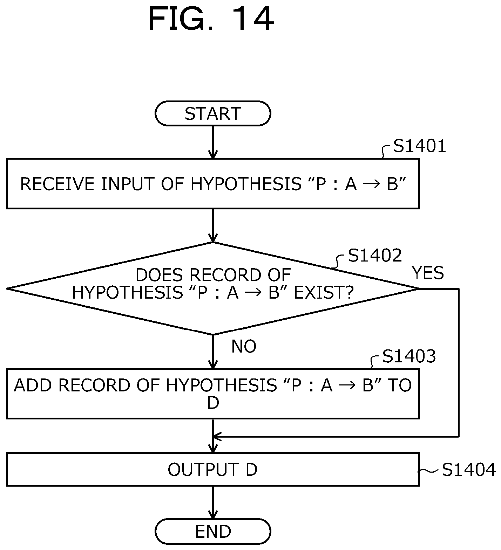

Next, an example of a first addition processing procedure executed by the information processing device 100 will be described with reference to FIG. 14. First addition processing is implemented, for example, by the CPU 401, the storage region such as the memory 402 or the recording medium 405, and the network I/F 403, illustrated in FIG. 4.

FIG. 14 is a flowchart illustrating an example of the first addition processing procedure. In FIG. 14, a current enhanced knowledge DB is set as "D". First, the information processing device 100 receives an input of a hypothesis "P : A → B" (step S1401).

Next, the information processing device 100 determines whether or not a record of the hypothesis "P : A → B" exists in D (step S1402). Here, in a case where the record exists (step S1402: Yes), the information processing device 100 proceeds to processing in step S1404. On the other hand, in a case where no record exists (step S1402: No), the information processing device 100 proceeds to processing in step S1403.

In step S1403, the information processing device 100 generates the record of the hypothesis "P : A → B" and adds the record to D (step S1403). Next, the information processing device 100 outputs D (step S1404). Then, the information processing device 100 ends the first addition processing. As a result, the information processing device 100 can appropriately update the enhanced knowledge DB.

### (First Contraction Processing Procedure)

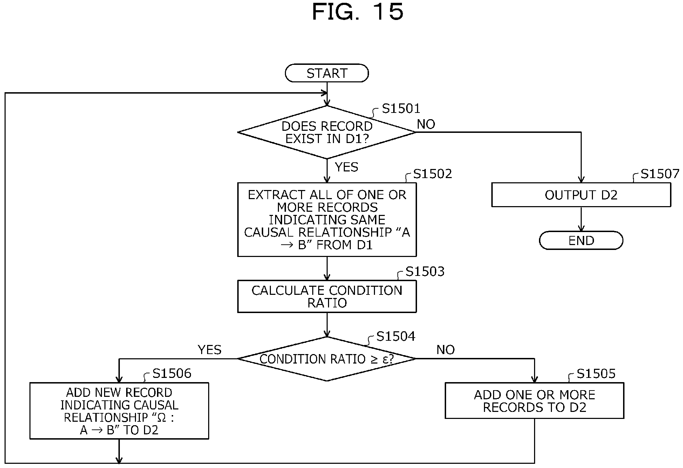

Next, an example of a first contraction processing procedure executed by the information processing device 100 will be described with reference to FIG. 15. First contraction processing is implemented, for example, by the CPU 401, the storage region such as the memory 402 or the recording medium 405, and the network I/F 403, illustrated in FIG. 4.

FIG. 15 is a flowchart illustrating an example of the first contraction processing procedure. In FIG. 15, a current enhanced knowledge DB is set as "D1". The information processing device 100 prepares an empty enhanced knowledge DB "D2". First, the information processing device 100 determines whether or not a record exists in D1 (step S1501).

Here, in a case where no record exists (step S1501: No), the information processing device 100 proceeds to processing in step S1507. On the other hand, in a case where the record exists (step S1501: Yes), the information processing device 100 proceeds to processing in step S1502.

In step S1502, the information processing device 100 extracts all of one or more records indicating the same causal relationship "A → B" from D1 and deletes the records from D1 (step S1502). Next, the information processing device 100 calculates a condition ratio, based on the extracted one or more records (step S1503).

Then, the information processing device 100 determines whether or not the calculated condition ratio ≥ ε (step S1504). Here, in a case where the condition ratio ≥ ε (step S1504: Yes), the information processing device 100 proceeds to processing in step S1506. On the other hand, in a case where the condition ratio ≥ ε is not satisfied (step S1504: No), the information processing device 100 proceeds to processing in step S1505.

In step S1505, the information processing device 100 adds the extracted one or more records to D2 (step S1505). Then, the information processing device 100 returns to the processing in step S1501.

In step S1506, the information processing device 100 adds a new record indicating a causal relationship "Ω : A → B" obtained by aggregating the extracted one or more records, to D2 (step S1506). Then, the information processing device 100 returns to the processing in step S1501.

In step S1507, the information processing device 100 outputs D2 (step S1507). Then, the information processing device 100 ends the first contraction processing. As a result, the information processing device 100 can suppress the increase in the data amount of the knowledge DB.

### (Second Addition Processing Procedure)

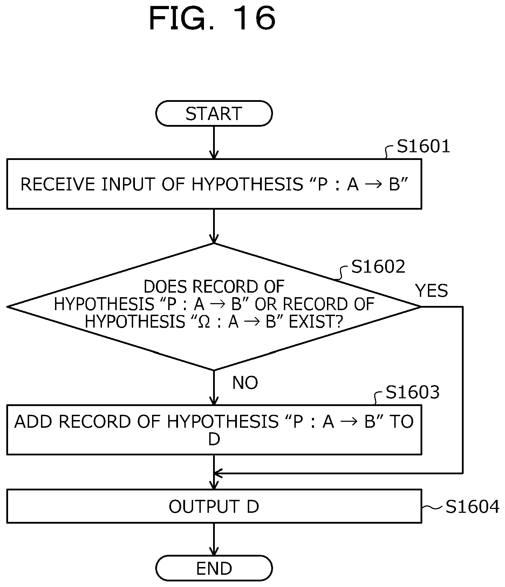

Next, an example of a second addition processing procedure executed by the information processing device 100 will be described with reference to FIG. 16. Second addition processing is implemented, for example, by the CPU 401, the storage region such as the memory 402 or the recording medium 405, and the network I/F 403, illustrated in FIG. 4.

FIG. 16 is a flowchart illustrating an example of the second addition processing procedure. In FIG. 16, a current enhanced knowledge DB is set as "D". First, the information processing device 100 receives an input of the hypothesis "P : A → B" (step S1601).

Next, the information processing device 100 determines whether or not at least one of a record of the hypothesis "P : A → B" and a record of the hypothesis "Ω : A → B" exists in D (step S1602). Here, in a case where the record exists (step S1602: Yes), the information processing device 100 proceeds to processing in step S1604. On the other hand, in a case where no record exists (step S1602: No), the information processing device 100 proceeds to processing in step S1603.

In step S1603, the information processing device 100 generates the record of the hypothesis "P : A → B" and adds the record to D (step S1603). Next, the information processing device 100 outputs D (step S1604). Then, the information processing device 100 ends the second addition processing. As a result, the information processing device 100 can appropriately update the enhanced knowledge DB.

### (Second Contraction Processing Procedure)

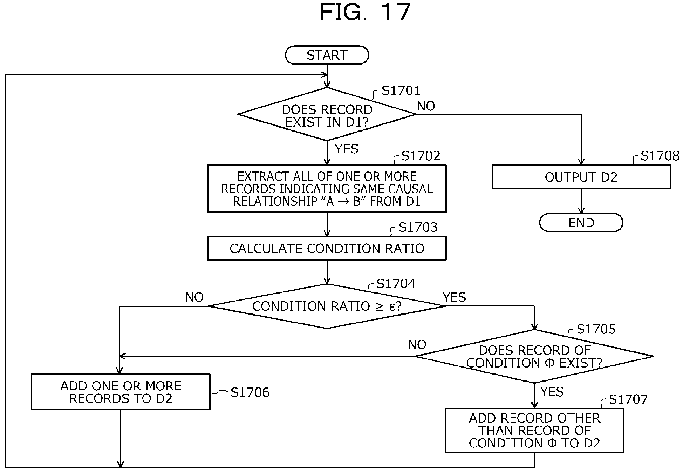

Next, an example of a second contraction processing procedure executed by the information processing device 100 will be described with reference to FIG. 17. Second contraction processing is implemented, for example, by the CPU 401, the storage region such as the memory 402 or the recording medium 405, and the network I/F 403, illustrated in FIG. 4.

FIG. 17 is a flowchart illustrating an example of the second contraction processing procedure. In FIG. 17, a current enhanced knowledge DB is set as "D1". The information processing device 100 prepares an empty enhanced knowledge DB "D2".

First, the information processing device 100 determines whether or not a record exists in D1 (step S1701). Here, in a case where no record exists (step S1701: No), the information processing device 100 proceeds to processing in step S1708. On the other hand, in a case where the record exists (step S1701: Yes), the information processing device 100 proceeds to processing in step S1702.

In step S1702, the information processing device 100 extracts all of one or more records indicating the same causal relationship "A → B" from D1 and deletes the records from D1 (step S1702). Next, the information processing device 100 calculates a condition ratio, based on the extracted one or more records (step S1703).

Then, the information processing device 100 determines whether or not the calculated condition ratio ≥ ε (step S1704). Here, in a case where the condition ratio ≥ ε (step S1704: Yes), the information processing device 100 proceeds to processing in step S1705. On the other hand, in a case where the condition ratio ≥ ε is not satisfied (step S1704: No), the information processing device 100 proceeds to processing in step S1706.

In step S1705, the information processing device 100 determines whether or not a record of a condition Φ, among the extracted one or more records, exists (step S1705) . Here, in a case where no record exists (step S1705: No), the information processing device 100 proceeds to processing in step S1706. On the other hand, in a case where the record exists (step S1705: Yes), the information processing device 100 proceeds to processing in step S1707.

In step S1706, the information processing device 100 adds the extracted one or more records to D2 (step S1706). Then, the information processing device 100 returns to the processing in step S1701.

In step S1707, the information processing device 100 adds the record other than the record of the condition Φ, among the one or more extracted records, to D2 (step S1707). Then, the information processing device 100 returns to the processing in step S1701.

In step S1708, the information processing device 100 outputs D2 (step S1708). Then, the information processing device 100 ends the second contraction processing. As a result, the information processing device 100 can suppress the increase in the data amount of the knowledge DB.

Here, the information processing device 100 may switch some steps in each of the flowcharts in FIGs. 14 to 17 in the processing order and execute the processing. Furthermore, the information processing device 100 may omit processing of some steps in each of the flowcharts in FIGs. 14 to 17.

As described above, according to the information processing device 100, it is possible to calculate the ratio of the sum set obtained by combining the different conditions for the universal set, for the plurality of hypotheses indicating the same first causal relationship under the different conditions, stored in the storage unit. According to the information processing device 100, it is possible to determine whether or not the calculated ratio is equal to or more than the threshold. According to the information processing device 100, in a case where the ratio is equal to or more than the threshold, the first hypothesis unconditionally indicating the first causal relationship in the universal set, different from the plurality of hypotheses, can be added to the storage unit. As a result, the information processing device 100 can appropriately update the storage unit.

According to the information processing device 100, in a case where the ratio is equal to or more than the threshold, the plurality of hypotheses can be deleted from the storage unit. As a result, the information processing device 100 can suppress the increase in the data amount of the storage unit.

According to the information processing device 100, in a case where the ratio is equal to or more than the threshold, if the second hypothesis, indicating the first causal relationship with an undetermined condition, different from the plurality of hypotheses is stored in the storage unit, it is possible to delete the second hypothesis from the storage unit. As a result, the information processing device 100 can suppress the increase in the data amount of the storage unit.

According to the information processing device 100, it is possible to receive an input of the third hypothesis indicating the first causal relationship under the new condition, different from the plurality of hypotheses. According to the information processing device 100, if the first hypothesis is not stored in the storage unit when the input of the third hypothesis is received, it is possible to add the input third hypothesis to the storage unit. According to the information processing device 100, if the first hypothesis is stored in the storage unit when the input of the third hypothesis is received, it is possible to discard the input third hypothesis. As a result, the information processing device 100 can suppress the increase in the data amount of the storage unit while appropriately updating the storage unit.

According to the information processing device 100, it is possible to calculate the ratio of the number of elements used for the sum set, with respect to the number of elements that may be used to express the condition, for the plurality of hypotheses stored in the storage unit. According to the information processing device 100, it is possible to determine whether or not the calculated ratio is equal to or more than the threshold. As a result, the information processing device 100 can accurately calculate the ratio.

According to the information processing device 100, it is possible to output the storage content of the storage unit. The information processing device 100 can make the storage content of the storage unit be available. The information processing device 100 allows the user to refer to the storage content of the storage unit.

According to the information processing device 100, it is possible to calculate the ratio of the sum set obtained by combining the different conditions for the first condition, for the plurality of hypotheses indicating the same first causal relationship under the different conditions contained in the first condition, stored in the storage unit. According to the information processing device 100, it is possible to determine whether or not the calculated ratio is equal to or more than the threshold. According to the information processing device 100, in a case where the ratio is equal to or more than the threshold, the first hypothesis unconditionally indicating the first causal relationship in the first condition, different from the plurality of hypotheses, can be added to the storage unit. As a result, the information processing device 100 can appropriately update the storage unit.

According to the information processing device 100, in a case where the ratio is equal to or more than the threshold, if the second hypothesis, provisionally indicating the first causal relationship under the first condition with an undetermined condition, different from the plurality of hypotheses, is stored in the storage unit, it is possible to delete the second hypothesis from the storage unit. As a result, the information processing device 100 can suppress the increase in the data amount of the storage unit.

According to the information processing device 100, it is possible to calculate the ratio of the sum set obtained by combining the different conditions for the universal set containing the different conditions, for the plurality of hypotheses indicating the same first causal relationship under the different conditions, stored in the storage unit. According to the information processing device 100, it is possible to determine whether or not the calculated ratio is equal to or more than the threshold. According to the information processing device 100, in a case where the ratio is equal to or more than the threshold, if the hypothesis, indicating the first causal relationship with an undetermined condition, different from the plurality of hypotheses, is stored in the storage unit, it is possible to delete the hypothesis from the storage unit. As a result, the information processing device 100 can suppress the increase in the data amount of the storage unit.

Note that the information processing method described in the present embodiment can be implemented by executing a program prepared in advance in a computer such as a PC or a workstation. The information processing program described in the present embodiment is recorded in a computer-readable recording medium and is executed by being read from the recording medium by the computer. The recording medium is a hard disk, a flexible disk, a compact disc (CD) -ROM, a magneto optical disc (MO), a digital versatile disc (DVD), or the like. Furthermore, the information processing program described in the present embodiment may be distributed via a network such as the Internet.

### REFERENCE SIGNS LIST

- 100: information processing device
- 101, 201, 311, 600: storage unit
- 300: information processing system
- 301: knowledge training device
- 302: client device
- 310: network
- 400: bus
- 401: CPU
- 402: memory
- 403: network I/F
- 404: recording medium I/F
- 405: recording medium
- 601: acquisition unit
- 602: determination unit
- 603: update unit
- 604: output unit
- 701: knowledge DB
- 702: hypothesis DB
- 703, 800, 900, 1000, 1100, 1200, 1300: enhanced knowledge DB
- 711: condition ratio calculation unit
- 712: knowledge contraction unit
- 713: hypothesis addition unit
- 721: condition applying unit
- 722: knowledge comparing unit

## Claims

1. An information processing program for causing a computer to execute processing comprising:
determining whether or not a ratio of a sum set obtained by combining different conditions for a universal set that contains the different conditions is equal to or more than a threshold, for a plurality of hypotheses that indicates a same first causal relationship under the different conditions, stored in a storage unit that stores a hypothesis that indicates a causal relationship between elements; and
in a case where the ratio is equal to or more than the threshold, adding a first hypothesis that unconditionally indicates the first causal relationship in the universal set, different from the plurality of hypotheses, to the storage unit.

2. The information processing program according to claim 1, for causing the computer to execute processing comprising:
deleting the plurality of hypotheses, from the storage unit, in a case where the ratio is equal to or more than the threshold.

3. The information processing program according to claim 2, for causing the computer to execute processing comprising:
in a case where the ratio is equal to or more than the threshold, when a second hypothesis that indicates the first causal relationship with an undetermined condition, different from the plurality of hypotheses, is stored in the storage unit, deleting the second hypothesis, from the storage unit.

4. The information processing program according to any one of claims 1 to 3, for causing the computer to execute processing comprising:
when an input of a third hypothesis (P : A → B) that indicates the first causal relationship under a new condition, different from the plurality of hypotheses, is received, when the first hypothesis is not stored in the storage unit, adding the input third hypothesis to the storage unit, and when the first hypothesis is stored in the storage unit, discarding the input third hypothesis.

5. The information processing program according to any one of claims 1 to 3, wherein
each of the different conditions is expressed by a combination of one or more elements, and
the information processing program causes the computer to execute processing comprising:
calculating a ratio of the number of elements used for the sum set, with respect to the number of elements that is used to express a condition, for the plurality of hypotheses stored in the storage unit, wherein
the determining processing
determines whether or not the calculated ratio is equal to or more than the threshold.

6. The information processing program according to any one of claims 1 to 3, for causing the computer to execute processing comprising:
outputting storage content of the storage unit.

7. The information processing program according to claim 1 or 2, wherein
the plurality of hypotheses indicates the same first causal relationship under the different conditions contained in a first condition,
the determining processing
determines whether or not a ratio of a sum set obtained by combining the different conditions for the first condition is equal to or more than a threshold, for the plurality of hypotheses, stored in the storage unit, and
the adding processing,
in a case where the ratio is equal to or more than the threshold, adds the first hypothesis that unconditionally indicates the first causal relationship in the first condition, different from the plurality of hypotheses, to the storage unit.

8. The information processing program according to claim 7, for causing the computer to execute processing comprising:
in a case where the ratio is equal to or more than the threshold, when a second hypothesis that provisionally indicates the first causal relationship under the first condition with an undetermined condition, different from the plurality of hypotheses, is stored in the storage unit, deleting the second hypothesis, from the storage unit.

9. An information processing method in which a computer executes processing comprising:
determining whether or not a ratio of a sum set obtained by combining different conditions for a universal set that contains the different conditions is equal to or more than a threshold, for a plurality of hypotheses (X : A → B, Y : A → B, Z : A → B) that indicates a same first causal relationship under the different conditions, stored in a storage unit that stores a hypothesis that indicates a causal relationship between elements; and
in a case where the ratio is equal to or more than the threshold, adding a first hypothesis (Ω : A → B) that unconditionally indicates the first causal relationship in the universal set, different from the plurality of hypotheses, to the storage unit.

10. An information processing device comprising:
a control unit configured to:
determine whether or not a ratio of a sum set obtained by combining different conditions for a universal set that contains the different conditions is equal to or more than a threshold, for a plurality of hypotheses (X : A → B, Y : A → B, Z : A → B) that indicates a same first causal relationship under the different conditions, stored in a storage unit that stores a hypothesis that indicates a causal relationship between elements; and
in a case where the ratio is equal to or more than the threshold, add a first hypothesis (Ω : A → B) that unconditionally indicates the first causal relationship in the universal set, different from the plurality of hypotheses, to the storage unit.

11. An information processing program for causing a computer to execute processing comprising:
determining whether or not a ratio of a sum set obtained by combining different conditions for a universal set that contains the different conditions is equal to or more than a threshold, for a plurality of hypotheses (X : A → B, Y : A → B, Z : A → B) that indicates a same first causal relationship under the different conditions, stored in a storage unit that stores a hypothesis that indicates a causal relationship between elements; and
in a case where the ratio is equal to or more than the threshold, when a hypothesis that indicates the first causal relationship with an undetermined condition, different from the plurality of hypotheses, is stored in the storage unit, deleting the hypothesis from the storage unit.

12. An information processing method for causing a computer to execute processing comprising:
determining whether or not a ratio of a sum set obtained by combining different conditions for a universal set that contains the different conditions is equal to or more than a threshold, for a plurality of hypotheses (X : A → B, Y : A → B, Z : A → B) that indicates a same first causal relationship under the different conditions, stored in a storage unit that stores a hypothesis that indicates a causal relationship between elements; and
in a case where the ratio is equal to or more than the threshold, when a hypothesis that indicates the first causal relationship with an undetermined condition, different from the plurality of hypotheses, is stored in the storage unit, deleting the hypothesis from the storage unit.

13. An information processing device comprising:
a control unit configured to:
determine whether or not a ratio of a sum set obtained by combining different conditions for a universal set that contains the different conditions is equal to or more than a threshold, for a plurality of hypotheses (X : A → B, Y : A → B, Z : A → B) that indicates a same first causal relationship under the different conditions, stored in a storage unit that stores a hypothesis that indicates a causal relationship between elements; and
in a case where the ratio is equal to or more than the threshold, when a hypothesis that indicates the first causal relationship with an undetermined condition, different from the plurality of hypotheses, is stored in the storage unit, delete the hypothesis from the storage unit.
